# EUROPÄISCHE PATENTSCHRIFT

(11) **EP 3 474 651 B1**
(45) Veröffentlichungstag und Bekanntmachung des Hinweises auf die Patenterteilung: **07.06.2023**
(21) Anmeldenummer: 17737210.9
(22) Anmeldetag: 12.06.2017
(51) Int. Cl.: A01B 21/06, A01B 25/00, A01B 33/06, A01B 35/16

(54) **VORRICHTUNG ZUR BEARBEITUNG VON AUF EINER BODENFLÄCHE BEFINDLICHEN PFLANZENTEILEN**
DEVICE FOR PROCESSING PLANT PARTS LOCATED ON A GROUND SURFACE
DISPOSITIF DE TRAITEMENT DE PARTIES DE PLANTE SE TROUVANT À LA SURFACE D'UN SOL

(30) Priorität: 27.06.2016 EP 16001430
(43) Veröffentlichungstag der Anmeldung: 01.05.2019
(73) Patentinhaber: Saphir Maschinenbau GmbH, 27404 Gyhum-Bockel (DE)
(72) Erfinder: HAVEMEYER, Frank, 27711 Osterholz-Scharmbeck (DE); POKRIEFKE, Michael, 27798 Hude (DE)
(74) Vertreter: Weeg, Thomas
(86) Internationale Anmeldenummer: PCT/EP2017/064307
(87) Internationale Veröffentlichungsnummer: WO 2018/001712

(56) Entgegenhaltungen:
- FR-A- 1 270 292
- US-A- 1 610 587
- US-A- 2 879 855
- US-A- 2 938 324

## Beschreibung

Die vorliegende Erfindung bezieht sich auf eine Vorrichtung zur Bearbeitung von auf einer Bodenfläche befindlichen Pflanzenteilen nach dem Oberbegriff des Anspruchs 1.

Aus dem Stand der Technik ist es bekannt, Unkraut in bestehenden Pflanzenbeständen mit rotierenden über die Bodenfläche bewegten Arbeitswerkzeugen zu bekämpfen. Ein gattungsmäßiges Beispiel hierfür findet sich in der Schrift US 3,082,829. Das rotierende Arbeitsorgan verfügt über fingerartige Federn, die wegen der Schrägstellung der Drehachse des Arbeitsorgans in der Betriebsstellung je nach Drehstellung mit dem nach außen weisenden Ende auf die Bodenfläche aufgedrückt werden. In dem ersten Kreisbogensegment einer Umdrehung tauchen die Federn bei der Rotationsbewegung des Arbeitsorgans mit den Enden der Federspitzen in den Boden ein und schädigen dabei Unkraut mechanisch. Im zweiten Kreisbogensegment einer Umdrehung haben die Federn keinen Bodenkontakt. Die Federn wirken nur punktuell, um den stehenden Nutzpflanzenbestand zu schonen. Wegen der starken Schrägstellung der Drehachse und der geraden Form der Federn ergibt sich nur eine geringe Arbeitsbreite der Vorrichtung. Eine effektive Unkrautbekämpfung ergibt sich auch nur dort, wo die Federn mit ihren äußeren Enden in den Boden eindringen können.

Aus der Schrift DE 198 43 677 A1 ist eine ähnliche Vorrichtung bekannt, mit der ebenfalls Unkraut zwischen stehenden Nutzpflanzen mechanisch entfernt werden soll. Es wird eine Kombination von starren und flexiblen Werkzeugen vorgeschlagen, wobei die starren Werkzeuge in den Boden in die Peripherie der Wurzeln eindringen und Federstränge als flexible Werkzeuge dienen, um das gelockerte Unkraut zwischen die Pflanzenreihen zu befördern. Während die starren Werkzeuge einen erheblichen Kraftbedarf verursachen, um sie in den Boden treiben zu können, und nur eine geringe Reichweite in ihrer Wirkung haben, die auf die Breite der bearbeiteten Pflanzenreihe selbst beschränkt ist, sind die flexiblen Werkzeuge als einfache Federn zu schwach, um selbst Unkräuter schädigen zu können. Vergleichbare Probleme ergeben sich bei der aus der Schrift DE 100 08 146 A1 bekannten Vorrichtung.

Eine gattungsgemäße Vorrichtung ist aus der Schrift FR 1 270 292 bekannt. Der dort offenbarte Kultivator ist zur Bodenbearbeitung bestimmt. Die Bearbeitungsorgane sind kreisförmig gestaltet. Ein jeweiliges zentrales Mittelteil jedes Bearbeitungsorgans ist über Speichen mit einem den Umfang des Bearbeitungsorgans begrenzenden Felgenkranz verbunden. Unabhängig vom Auflagedruck auf das Bearbeitungsorgan behält der Felgenkranz bei der Bodenbearbeitung seine in einer Ebene ausgerichtete Kreisform bei. Die über den Felgenkranz überstehenden Spitzen sollen sich bei der Bewegung der Bearbeitungsorgane über das Feld in den Boden bohren und diesen aufbrechen.

Neben den vorstehend genannten Vorrichtungen zur Unkrautbekämpfung gibt es Vorrichtungen zur Stoppelbearbeitung. Nach der Ernte des Getreides bleiben die Stoppeln, also der Rest der Getreidepflanze, auf dem Feld zurück. Wenn das Stroh nicht gepresst und vom Feld gefahren wird, kommen das gehäckselte Stroh und der Abfall aus der Getreidereinigung des Mähdreschers hinzu. Um das Feld für die nachfolgende Frucht vorzubereiten, werden die Stoppeln und die Erntereste in den Boden eingearbeitet, indem der Boden mit Werkzeugen flach gelockert wird. Dadurch verrottet das Stroh besser und das Ausfallgetreide kann schneller auflaufen bzw. keimen. Für eine Stoppel- und Strohbearbeitung sind die vorstehend genannten Vorrichtungen nicht geeignet. Für die Stoppelbearbeitung werden vorwiegend Grubber oder Scheibeneggen eingesetzt. Diese sind jedoch schwer und teuer und greifen in die obere Bodenschicht ein, was energieintensiv ist und die Bodenerosion befördert.

Es ist die Aufgabe der vorliegenden Erfindung, eine Vorrichtung zu schaffen, mit der eine effektive Stoppelbearbeitung möglich ist, ohne dabei tiefer in die obere Bodenschicht eingreifen zu müssen.

Die Aufgabe wird für eine gattungsgemäße Vorrichtung durch die kennzeichnenden Merkmale des Anspruchs 1 gelöst.

Mit der erfindungsgemäßen Vorrichtung ist es möglich, eine effektive Stoppel- und Strohbearbeitung zu leisten, ohne dabei tiefer in die oberste Bodenschicht eindringen zu müssen. Im Normalfall beschränkt sich die Eindringtiefe der Bearbeitungswerkzeuge während des Einsatzes auf bis zu 1 cm. Die auf einer Bodenfläche befindlichen Stoppeln werden bei der Stoppelbearbeitung mit der erfindungsgemäßen Vorrichtung vom Bearbeitungswerkzeug erfasst, über die Bodenfläche geschleift, dabei in ihrer Zellstruktur geschädigt und auf diese Weise für eine bessere und schnellere Verrottung vorbereitet. Die Stoppeln und auch Stroh und Kaff aus dem Mähdrusch werden auf die Bodenfläche gedrückt, wo sie stärker Feuchtigkeit und Pilzen ausgesetzt sind und dadurch schneller verrotten. Jungpflanzen, die aus Ausfall- und Verlustgetreide bereits aufgegangen sind, werden bei dieser Bearbeitung ebenfalls erheblich geschädigt und gehen ein. Samenkörner, die noch nicht aufgegangen sind, werden bei dieser Art der Stoppelbearbeitung nicht in den Boden eingearbeitet, sondern bleiben obenauf liegen, wo sie über die Pilzrotte so stark geschädigt werden, dass sie für die nächste Ackerfrucht keine echte Konkurrenz darstellen. Beispielsweise Rapskörner oder auch die Samen von Ackerfuchsschwanz als Unkraut können auf diese Weise sehr erfolgreich daran gehindert werden, aufzugehen und die nachfolgende Feldfrucht in ihrer Entwicklung zu beeinträchtigen. Dieser Bearbeitungserfolg ist umweltfreundlich nur durch eine mechanische Bodenbearbeitung ohne den Einsatz von Herbiziden möglich.

Durch die flexibel ausgestalteten Tragarme und/oder die flexible Abstützung der Tragarme, an denen die Bearbeitungswerkzeuge gehalten sind, verändert sich die Form des Hüllkreises, wenn ein Arbeitsorgan unter Einwirkung eines Auflagedrucks im ersten Kreisbogensegment über eine Bodenfläche streift und die betreffenden Tragarme dadurch im Verhältnis zur Drehachse des Arbeitsorgans angehoben sind. Im Bereich des ersten Kreisbogensegments, in dem die Bearbeitungswerkzeuge die Bodenfläche berühren, ist der Hüllkreis dann nach oben hin gestaucht. Infolge der Stauchung vergrößert sich aber auch die Auflagefläche, mit der das Arbeitsorgan über die Bearbeitungswerkzeuge die Bodenfläche berührt. Durch die Stauchung und/oder die Einfederbewegung der Tragarme gegen die flexible Abstützung im ersten Kreisbogensegment können die Bearbeitungswerkzeuge möglichst mit ihrer jeweiligen vollen Länge der Arbeitskante auf der von der Bodenoberfläche definierten Arbeitsebene plan aufliegen. Um dies möglichst optimal zu ermöglichen, sollte die vorgegebene Winkellage der Arbeitskanten der Bearbeitungswerkzeuge im Verhältnis zum jeweiligen Tragarm, der in der Betriebsstellung einwirkende Auflagedruck und die Federhärte der Tragarme beziehungsweise der flexiblen Abstützung aufeinander abgestimmt sein. Während das Arbeitsorgan bei schräg gestellter Drehachse und unflexiblen Tragarmen den Boden mit den Bearbeitungswerkzeugen nur kurz an einer einzigen endseitigen Stelle berühren könnte, verlängert sich durch die Stauchung beziehungsweise die Einfederbewegung der Tragarme über die dadurch vergrößerte Kontaktfläche der Arbeitsorgane auch die Verweilzeit der Bearbeitungswerkzeuge auf der Bodenfläche während einer Umdrehung des Arbeitsorgans erheblich. Somit erhöht sich die von den Bearbeitungswerkzeugen leistbare Bearbeitungsleistung während einer Umdrehung des Arbeitsorgans allein schon in flächenmäßiger und zeitlicher Hinsicht.

Für das mit der Vorrichtung erzielte Bearbeitungsergebnis ist aber auch von Bedeutung, dass die Bearbeitungswerkzeuge und mit ihnen die daran ausgebildeten Arbeitskanten während einer Drehbewegung des Arbeitsorgans über das erste Kreisbogensegment hinweg durch die größere Kontaktfläche nicht nur von vorne nach hinten, sondern zusätzlich auch quer zur Fahrtrichtung der Vorrichtung hin und her über die Bodenfläche bewegt werden. Aus der größeren Kontaktfläche und der rotierenden Bewegung des Arbeitsorgans über das erste Kreisbogensegment hinweg ergibt sich eine in Querrichtung wellenförmige Schleifbewegung der Bearbeitungswerkzeuge über die Bodenfläche, die eine intensive Bearbeitung der auf der bearbeiteten Bodenfläche liegenden Pflanzenteile ermöglicht. Durch die flexible Ausweichbewegung der Tragarme können die Bearbeitungswerkzeuge dabei ab dem ersten Bodenkontakt nahezu während des gesamten Rotationsumlaufes über das erste Kreisbogensegment hinweg mit der vollen Breite ihrer Arbeitskante und nicht nur mit ihren äußeren Spitzen die Bodenfläche bearbeiten. Hinzu kommt, dass bei mehreren am Arbeitsorgan angebrachten Tragarmen und Bearbeitungswerkzeugen auf einer vom Arbeitsorgan überfahrenen Bodenfläche mehrere bei der Rotationsbewegung des Arbeitsorgans aufeinander folgende Bearbeitungswerkzeuge entsprechende Schleifbewegungen nacheinander ausgeführt haben.

Zumindest eine Arbeitskante ist an einem Bearbeitungswerkzeug ausgebildet. Sie kann beispielsweise auf der nach außen weisenden Seite, zusätzlich oder alternativ aber auch an einer oder beiden Innenseiten eines Bearbeitungswerkzeugs ausgebildet sein. Mit den Innenseiten des Bearbeitungswerkzeugs sind die Seiten gemeint, die innerhalb des Hüllkreises des Arbeitsorgans an der der Drehrichtung zugewandten oder abgewandten Seite des Bearbeitungswerkzeuges liegen. Durch die kreisende Bewegung des Arbeitsorgans entsteht zwischen den mit der Bodenfläche in Kontakt befindlichen Flächen der Bearbeitungswerkzeuge und der Bodenfläche Schlupf in Längs- und Querrichtung, durch den die Zellen der zu bearbeitenden und sich zwischen den mit der Bodenfläche in Kontakt stehenden Flächen der Bearbeitungswerkzeuge befindlichen Pflanzenteile aufgeschlossen werden, wenn sie zwischen das Bearbeitungswerkzeug und die Bodenfläche geraten. Da der Teil des Arbeitsorgans mit der Seite, mit der es auf die Bodenfläche aufgestützt ist, entgegen der Fahrtrichtung rotiert, wird das Arbeitsorgan insgesamt zwar mit der jeweiligen Fahrgeschwindigkeit über die Bodenfläche bewegt, die Relativbewegung des Bearbeitungswerkzeugs zur Bodenfläche, die es kontaktiert, ist aber um den entgegen der Fahrtrichtung wirkenden Anteil an der Rotationsgeschwindigkeit geringer. Bei einem passiven Antrieb des Arbeitsorgans allein über den Bodenkontakt entspricht die Rotationsgeschwindigkeit der Bearbeitungswerkzeuge etwa der Fahrgeschwindigkeit, während diese bei einem aktiv angetriebenen Arbeitsorgan stärker davon abweichen kann. Die etwa der Fahrgeschwindigkeit entsprechende Rotationsgeschwindigkeit verdeutlicht aber, dass die Einwirkung der Bearbeitungswerkzeuge auf die Pflanzen insbesondere durch die Bewegung in Querrichtung zur Vorfahrtrichtung schon ausreichend sein kann, um einen gewünschten Bearbeitungserfolg zu erzielen.

Je nach Entfernung des jeweils betrachteten Punktes am Bearbeitungswerkzeug von der Drehachse des Arbeitsorgans ergibt sich auch eine unterschiedliche resultierende Bewegungsgeschwindigkeit dieses Punktes auf der Bodenfläche. Der an einem Punkt des Bearbeitungswerkzeugs betrachtete auftretende Schlupf zwischen dem Bearbeitungswerkzeug und der Bodenfläche ist also über die Länge des Tragarms und dem daran befestigten Bearbeitungswerkzeug im Verlauf einer Rotationsbewegung im ersten Kreisbogensegment unterschiedlich. Da sich auch der Einfluss des entgegen der Fahrtrichtung wirkenden Anteils an der Rotationsgeschwindigkeit auf die an einem Punkt des Werkzeugs betrachtete Relativbewegung des Bearbeitungswerkzeugs zur Bodenfläche je nach Winkellage des betrachteten Punktes zur Drehachse verändert, ergeben sich insgesamt ständig wechselnde Schlupfverhältnisse an einem Bearbeitungswerkzeug zur Bodenfläche hin, während es durch das erste Kreisbogensegment bewegt wird.

Während eines Umlaufs eines Bearbeitungswerkzeugs erzeugt eine beim ersten Bodenkontakt zu Beginn des ersten Kreisbogensegments nach vorne und außen weisende Arbeitskante zunächst den größten Schlupf auf die zu bearbeitenden Pflanzenteile, während dabei nach hinten und innen weisende Arbeitskanten - soweit vorhanden - im Schatten der nach vorne weisenden Arbeitskante liegen. Wenn das betreffende Bearbeitungswerkzeug das hintere Ende des ersten Kreisbogensegments erreicht, ist das genau umgekehrt, wenn eine oder mehrere nach innen weisende Arbeitskanten am Arbeitsorgan ausgebildet sind. Während der Rotation eines Bearbeitungswerkzeugs durch das erste Kreisbogensegment variieren die Arbeitsanteile der verschiedenen Arbeitskanten je nach jeweiliger Lage zur Fahrtrichtung. Es ist deshalb vorteilhaft, an einem Bearbeitungswerkzeug mehrere Arbeitskanten auszubilden, weil sich dadurch die Arbeitsleistung der Vorrichtung durch mehrere während eines Umlaufs an einem Bearbeitungswerkzeug wirksame Arbeitskanten erhöht.

Außerdem kann der auf das Bearbeitungswerkzeug wirkende Anpressdruck während eines Umlaufs veränderlich sein, insbesondere wegen der sich aus der Flexibilität des Tragarms darin und/oder aus den sich in der flexiblen Abstützung der Tragarme aufbauenden Rückstellkräfte. Diese steigen vom Anfang bis zur Mitte des ersten Kreisbogensegments an und fallen danach wieder bis zum Ende des ersten Kreisbogensegments ab. Es ist aber auch möglich, die Bearbeitungswerkzeuge mit einem konstanten oder nahezu konstanten Anpressdruck zu betreiben, beispielsweise in einem hydraulischen Ausgleichssystem, mit beispielsweise einer Flüssigkeitsblase, gegen die die Bearbeitungswerkzeuge abgestützt sind und die im ersten Kreisbogensegment eine Eintauchbewegung der Tragarme zulässt.

Wenn an einem Bearbeitungswerkzeug mehrere Arbeitskanten ausgebildet sind, wirkt die erste mit der Bodenfläche in Kontakt kommende Arbeitskante während der Rotation des Bearbeitungswerkzeugs durch das erste Kreisbogensegment zunächst aggressiver, weil die Bodenfläche noch egalisiert und die stehenden Stoppeln und aufliegenden Stroh- und Kaffbestandteile noch flachgelegt werden müssen, während eine weitere Arbeitskante während der Rotation des Bearbeitungswerkzeugs durch den zweiten Teil des Kreisbogensegments die Fläche eher nur noch abziehen muss. Um für diese beiden Wirkungsweisen jeweils eine optimale Funktion zu schaffen, können die mehreren Arbeitskanten unterschiedlich voneinander ausgestaltet sein, beispielsweise als stumpfe Kanten oder scharfe Klingen, mit gerader oder wellenförmiger Kante, mit spitzen oder stumpfen Zähnen und dergleichen.

Im zweiten Kreisbogensegment sind die Bearbeitungswerkzeuge von der Bodenfläche abgehoben und bewegen sich durch die Luft. Bei einer Umdrehung des Arbeitsorgans kann es sich ergeben, dass eine Arbeitskante eines Bearbeitungswerkzeugs in einer oder zwei Winkelstellungen der Rotationsbewegung im zweiten Kreisbogensegment ebenfalls parallel zur Bodenoberfläche steht, das ist aber für die Erfindung ohne wesentliche Bedeutung. Wichtig ist, dass die Arbeitskante jedenfalls im ersten Kreisbogensegment parallel zur Bodenoberfläche mit einem Auflagedruck auf der Bodenfläche aufliegend positioniert ist, und das Bearbeitungswerkzeug bei entlastetem Tragarm im zweiten Kreisbogensegment von der Bodenfläche abgehoben ist. Dabei können mitgeführte Boden- und Pflanzenbestandteile vom Bearbeitungswerkzeug abfallen, das Bearbeitungswerkzeug wird auf diese Weise gereinigt, bevor es erneut auf die Bodenfläche aufsetzt. Das Abfallen von anhaftenden Partikeln zurück auf den Boden wird durch den Fahrtwind und die Bewegungen und Vibrationen des Trägerfahrzeugs während der Vorfahrt unterstützt.

Die Flexibilität der Tragarme in axialer Richtung der Drehachse kann beispielsweise über die Auswahl eines geeigneten Materials ermöglicht werden. Metallische Werkstoffe verfügen beispielsweise über eine Eigenelastizität, die entsprechende Ein- und Ausfederbewegungen der Tragarme möglich macht. Zur Einstellung einer nutzbaren Flexibilitätsrate muss dann das metallische Material in einer der geforderten Flexibilität entsprechenden Materialstärke ausgewählt werden. Es können aber auch andere Materialien, wie beispielsweise faserverstärkte Kunststoffe, verwendet werden. Die Flexibilität kann aber auch ergänzend oder alternativ über entlang der Länge eines Tragarms angeordnete gesonderte Federn, Gelenke oder elastische Puffer, beispielsweise aus Gummi, herbeigeführt werden, wobei dann der Tragarm selbst im Rahmen der beim Gebrauch auftretenden Belastungen im Wesentlichen weniger flexibel oder sogar biegesteif bleiben kann. Die für eine einwandfreie Funktion der Vorrichtung notwendige Flexibilität findet ihre Grenze in einem Federverhalten, bei dem in der Betriebsstellung über den Tragarm nicht mehr ausreichend Anpressdruck auf das Bearbeitungswerkzeug erzeugt werden kann, um die auf der Bodenfläche befindlichen Pflanzenteile zu bewegen und zu schädigen. Die trotz der Flexibilität noch benötigte Eigensteifigkeit des Tragarms sollte ausreichen, um das Bearbeitungswerkzeug im ersten Kreisbogensegment sicher und fest über die Bodenfläche zu führen. Dabei können leichte Bodenunebenheiten auch mit einem oder mehreren Bearbeitungswerkzeugen glatt gestrichen und egalisiert werden.

Die Flexibilität der Tragarme aus ihrer Abstützung kann ermöglicht werden, indem die Befestigungspunkte, an denen die Tragarme befestigt sind, selbst flexibel gelagert sind, und/oder die Tragarme sind für sich zwar starr oder im Wesentlichen nicht flexibel, sie sind aber beweglich an ihren jeweiligen Befestigungspunkten aufgehängt und gegen die Kraft eines Kraftspeichers mit ihrem das Bearbeitungswerkzeug tragenden Ende nach oben beweglich. Der Kraftspeicher kann beispielsweise eine Feder, ein Luftkissen, ein Raumkörper aus einem polymeren Material oder dergleichen sein.

Mit dem Merkmal der starr an einem Bearbeitungswerkzeug ausgebildeten Arbeitskante ist gemeint, dass diese eine so hohe Eigensteifigkeit und Festigkeit aufweist, dass sie bei der rotierenden Bewegung des Arbeitsorgans über die zu bearbeitende Bodenfläche darauf liegende oder darin wurzelnde Pflanzenteile vom Boden ablöst, diese mitnimmt und über die Bodenfläche bewegt, mit seiner dem Boden zugewandten Unterseite dabei mechanisch schädigt und sodann auf der Bodenfläche zurücklässt. Die Arbeitskante ist der Bereich, in dem die etwa oder genau vertikalen Flächen eines Bearbeitungswerkzeugs an die bodenseitigen Flächen des Bearbeitungswerkzeugs stoßen. Sie kann als eine scharfe Kante oder auch gerundet ausgeführt sein. Sie kann insbesondere so ausgebildet sein, dass sie eine Scherwirkung auf Pflanzenteile auszuüben vermag. Die Arbeitskante kann auch klingenartig ausgebildet sein. Die an die Arbeitskante bodenseitig angrenzenden Flächen des Bearbeitungswerkzeugs üben mit dem vom Arbeitsorgan erzeugten Schlupf eine Schleifwirkung auf die Pflanzenteile aus. Die Arbeitskante muss keine lineare Form aufweisen.

Über die starr ausgebildete Arbeitskante kann auch je nach einwirkendem Auflagedruck eine unebene Bodenfläche egalisiert werden, indem die Arbeitskante beim Gebrauch der Vorrichtung über die Arbeitsebene überstehendes Bodenmaterial abrasiert und in Förderrichtung abfördert. Die Arbeitskante wird beim Betrieb der Vorrichtung im Idealfall genau über die Bodenoberfläche bewegt, sie kann aber auch leicht darüber oder darunter bewegt werden.

Auf die Arbeitskante treffende Pflanzenteile können an der Arbeitskante angeschnitten, durchgeschnitten, durchgerissen, geknickt, gequetscht oder auf sonstige Weise mechanisch geschädigt werden. Bei den Pflanzenteilen kann es sich um Stängel- und/oder Blattmaterial und/oder Körner handeln. Die Pflanzenteile können vom Bearbeitungswerkzeug bei dessen Rotationsbewegung erfasst und mitgenommen werden, wobei sich an ihnen weitere mechanische Schädigungen einstellen können.

Die an den Bearbeitungswerkzeugen ausgebildeten Arbeitskanten erstrecken sich über eine für die Funktion sinnvoll brauchbare Arbeitsbreite. Sie können dazu eine zumindest im Wesentlichen geradlinige oder bogenförmige Grundform aufweisen. Eine Arbeitskante ist die Linie, an der entlang das Bearbeitungswerkzeug bei planer Bodenfläche in der Betriebsstellung des Arbeitsorgans als Arbeitsebene einen Bodenkontakt hat. Die Arbeitskante verläuft vorteilhaft im Wesentlichen gradlinig oder bogenförmig, wobei dieses Merkmal auch erfüllt ist, wenn sie zwar in Teillängen beispielsweise eine Wellenform oder einen Wellenschliff aufweist, sich verallgemeinernd aber über eine von ihr abgedeckte Arbeitsbreite erstreckt.

Die Bearbeitungswerkzeuge können jede beliebige Raumform einnehmen. Sie können beispielsweise als Platten, Stäbe, Quader oder sonstige Raumform mit spiegelsymmetrischen oder nicht spiegelsymmetrischen Geometrien ausgebildet sein. Die Bearbeitungswerkzeuge können sich in Rotationsrichtung verjüngen oder verbreitern und an den nach innen und außen weisenden Enden eckig oder gerundet gestaltet sein.

Die im Allgemeinen gerade oder bogenförmig verlaufende Arbeitskante kann zur Arbeitsbreite schräg verlaufende Kanten oder eine Verzahnung aufweisen. Durch schräg verlaufende Kanten oder eine verzahnte Kante kann die Aggressivität der Vorrichtung gegen Pflanzenteile erhöht werden. Bei schräg verlaufenden oder verzahnten Kanten ergibt sich eher ein ziehender Schnitt als ein stumpfer Schlag auf die von der Arbeitskante getroffenen Pflanzenteile.

Für das Ergebnis der mit der erfindungsgemäßen Vorrichtung bearbeiteten Bodenfläche spielt es nur eine untergeordnete Rolle, ob die Rotationsbewegung des Arbeitsorgans über einen eigenen motorischen Drehantrieb erzeugt wird, oder ob das Arbeitsorgan indirekt angetrieben wird über die Abwälzbewegung der Bearbeitungswerkzeuge über die Bodenfläche. Bei einer Schrägstellung der Drehachse zur Vertikalen quer zur Fahrtrichtung der Vorrichtung ergibt sich bei der Vorfahrt der Vorrichtung über die vom Auflagedruck auf die Bodenfläche gepressten Bearbeitungswerkzeuge ein Drehimpuls auf ein Arbeitsorgan, durch den dieses rotiert und dabei über die Bearbeitungswerkzeuge zwangsläufig auch die auf der Bodenfläche befindlichen Pflanzenteile bearbeitet. Zusätzlich kann die Drehachse zur Vertikalen noch in oder entgegen der Fahrtrichtung angestellt sein. Ein eigener motorischer Antrieb eines Arbeitsorgans verstärkt die Rotationsbewegung zwar und kann diese zusätzlich beschleunigen, der eigene motorische Antrieb ist aber auch aufwendiger, teurer und schwerer.

Der Auflagedruck des Arbeitsorgans kann sich aus dessen Eigengewicht oder einem zusätzlichen Ballastgewicht ergeben, das auf die Vorrichtung zusätzlich aufgelastet ist, wie beispielsweise Blei- oder Betonplatten oder ein Wassertank. Es ist auch möglich, den Auflagedruck über ein Traggestänge der Tragvorrichtung zu beeinflussen, auf das eine Arbeitshydraulik eines Trägerfahrzeugs einwirkt. Über die Arbeitshydraulik kann der auf die Vorrichtung und die Bearbeitungswerkzeuge einwirkende Auflagedruck je nach Einstellung erhöht oder verringert werden. Es ist möglich, über die Ballastgewichte und/oder die Arbeitshydraulik die Aggressivität und Wirkungsweise der Vorrichtung an einen gewünschten Wirkungsgrad anzupassen.

Nach einer Ausgestaltung der Erfindung sind die Bearbeitungswerkzeuge beweglich mit den zugehörigen Tragarmen verbunden. Die bewegliche Anbindung, beispielsweise über ein Dreh- oder Schwenkgelenk, erleichtert eine Anpassung der Bearbeitungswerkzeuge an die Bodenkontur. Dadurch können die Bearbeitungswerkzeuge auch bei unebenen Bodenverhältnissen über ihre volle Arbeitsbreite wirken. Die Beweglichkeit der Bearbeitungswerkzeuge kann durch Anschläge begrenzt werden, oder die Bearbeitungswerkzeuge sind wahlweise arretierbar. Die Anschläge sind vorteilhaft so gesetzt, dass sich bei einer Auflage des Bearbeitungswerkzeugs auf eine ebene Bodenfläche Freiheitsgrade für eine Dreh- oder Schwenkbewegung in zumindest zwei Richtungen ergeben, insbesondere um den Kreisbogen herum, an dem entlang die Bearbeitungswerkzeuge rotieren. Bei beweglich mit dem Tragarm verbundenen Bearbeitungswerkzeugen kann es sein, dass die Arbeitskanten der Bearbeitungswerkzeuge im zweiten Kreisbogensegment parallel zur Bodenfläche gehalten sind, sie befinden sich dann aber nicht mehr in der Mittelstellung, in der sie sich in der Betriebsstellung des Arbeitsorgans im ersten Kreisbogensegment bei einer ebenen Bodenfläche befinden.

Nach einer Ausgestaltung der Erfindung weisen die Bearbeitungswerkzeuge eine Leistenform auf. Die Leistenform bedeutet ein schmal und lang ausgebildetes Bauteil, das über seine Länge mit der oder den daran ausgebildeten Arbeitskanten beim Betrieb der Vorrichtung und der entsprechenden Rotationsbewegung des Arbeitsorgans eine vergleichsweise große Fläche bearbeiten kann, ohne deshalb besonders schwer ausgebildet sein zu müssen. Die schmale Bauform bietet den Vorteil, dass sich während des Gebrauchs nicht viel Material auf der Oberseite des Bearbeitungswerkzeugs ansammeln kann und das Bearbeitungswerkzeug insgesamt nur ein geringes Gewicht aufweist.

Nach einer Ausgestaltung der Erfindung ist die Arbeitsebene der Arbeitskante eines jeweiligen Bearbeitungswerkzeugs in einem Anstellwinkel schräg zur Tragachse des Tragarms angestellt. Durch den schrägen Anstellwinkel der am äußeren Ende des Tragarms befindlichen Arbeitsebene der Arbeitskante zur Tragachse des Tragarms ergibt sich ein Höhenversatz des zur Drehachse gelegenen Endes des Tragarms zum Boden hin, so dass die Drehachse des Arbeitsorgans so hoch in der Vorrichtung angeordnet sein kann, dass sie auch in der Betriebsstellung noch einen ausreichenden Abstand zur Bodenoberfläche einhält, ohne selbst einen Bodenkontakt zu haben und dabei beschädigt werden zu können.

Nach einer Ausgestaltung der Erfindung ist die Flexibilität der Tragarme über ihre Baulänge in axialer Richtung der Drehachse größer als in ihre Rotationsrichtung. Wenn die Tragarme in oder entgegen der Rotationsrichtung zu weich ausgestaltet sind, können sie die Wellenbewegung quer zur Vorfahrtrichtung zumindest nicht in vollem Umfang ausführen. Sie neigen dann auch dazu, Hindernissen auszuweichen, die sie im Rahmen der Stoppelbearbeitung jedoch bearbeiten sollen. Wenn die Tragarme dagegen in axialer Richtung der Drehachse leichter ausweichen können, bleibt der negative Einfluss auf das Arbeitsergebnis geringer.

Nach einer Ausgestaltung der Erfindung beträgt die Einfederbewegung eines Tragarms im ersten Kreisbogensegment in der Betriebsstellung der Vorrichtung mehr 1/20 des Außendurchmessers der größten radialen Ausdehnung der Bearbeitungswerkzeuge. Je stärker ein Tragarm in der Betriebsstellung einfedert, umso größer wird der Winkel, den das erste Kreisbogensegment abdeckt, und umso größer wird die Amplitude in der Wellenbewegung des Bearbeitungswerkzeugs quer zur Vorfahrtrichtung, und auch die Arbeitsbreite der Vorrichtung und die Bearbeitungsintensität durch die Bearbeitungswerkzeuge wird größer. Für das gewünschte Einfederverhalten muss die Federhärte des Tragarms auf die Zahl der Tragarme mit Bodenkontakt und den zu erwartenden Auflagedruck angepasst sein.

Nach einer Ausgestaltung der Erfindung sind die Bearbeitungswerkzeuge an den freien Enden der Tragarme befestigt und ein Teil einer Arbeitskante an einem jeweiligen Bearbeitungswerkzeug erstreckt sich vom Befestigungspunkt des Bearbeitungswerkzeugs am Tragarm gesehen in Richtung der Drehachse des Arbeitsorgans. Durch ein Design, bei dem sich die Arbeitskante zu einem Teil vom Befestigungspunkt des Bearbeitungswerkzeugs am Tragarm in Richtung der Drehachse erstreckt, wird auch ein Teil der Reichweite der Tragarme dazu genutzt, um darunter die Stoppelbearbeitung auszuführen. Daraus ergibt sich eine kompakte Bauweise der Vorrichtung bei einer hohen Leistungsdichte.

Nach einer Ausgestaltung der Erfindung befindet sich der Befestigungspunkt eines jeweiligen Bearbeitungswerkzeugs am zugehörigen Tragarm im mittleren Bereich des Bearbeitungswerkzeugs. Durch die Krafteinleitung der vom Tragarm auf das Bearbeitungswerkzeug übertragenen Kräfte im mittleren Bereich des Bearbeitungswerkzeugs werden eventuelle Torsionskräfte innerhalb des Befestigungspunktes und daraus resultierende Risiken von Überlastungs- und Sprödbrüchen möglichst gering gehalten. Wegen der zumindest annähernd gleichmäßigen Kräfte ergibt sich eine große Laufruhe des Arbeitsorgans, und auch Schläge und Stöße, die auf ein Bearbeitungswerkzeug punktuell einwirken können, werden über den Befestigungspunkt im mittleren Bereich gut in das Arbeitsorgan übertragen und von diesem aufgefangen.

Nach einer Ausgestaltung der Erfindung befindet sich der Befestigungspunkt eines jeweiligen Bearbeitungswerkzeugs am zugehörigen Tragarm nahe dem Flächenschwerpunkt des Bearbeitungswerkzeugs. Da sich die Belastung eines Bearbeitungswerkzeugs während des Betriebs vor allem durch die Reibkraft ergibt, mit denen das Bearbeitungswerkzeug einen flächigen Kontakt zum Boden hat, ist es sinnvoll, das Bearbeitungswerkzeug nahe seines Flächenschwerpunkts mit dem Tragarm zu verbinden. Mit der Angabe der nahen Anbringung ist gemeint, dass eine Abweichung des Befestigungspunktes vom Flächenschwerpunkt um wenige cm unerheblich ist.

Nach einer Ausgestaltung der Erfindung sind ein erstes Winkelmaß der Tragachse des jeweiligen Tragarms zur Drehachse, ein zweites Winkelmaß der Arbeitskante des Bearbeitungswerkzeugs zum jeweiligen Tragarm, die Form des jeweiligen Tragarms, das Winkelmaß der Drehachse zur Vertikalen, die Federrate des jeweiligen Tragarms und die Form und Anbindung des jeweiligen Bearbeitungswerkzeugs an den jeweiligen Tragarm so gewählt, dass das erste Kreisbogensegment in der Betriebsstellung der Vorrichtung einen Winkel von zumindest 60° abdeckt. Bei einem Winkel des ersten Kreisbogensegments in der Betriebsstellung der Vorrichtung von zumindest 45° ergibt sich eine ausreichende Arbeitsbreite der Vorrichtung, eine gut zur Stoppelbearbeitung nutzbaren Amplitude der Wellenbewegung der Arbeitskanten quer zur Fahrtrichtung und ein gutes Arbeitsergebnis der Vorrichtung.

Nach einer Ausgestaltung der Erfindung weist ein Bearbeitungswerkzeug an seinem nach außen weisenden Ende einen oder mehrere Mitnehmerzähne auf. Die Mitnehmerzähne können im Verlauf einer Rotationsbewegung und der Vorfahrt der Vorrichtung anstehendes Pflanzengut und Bodenmaterial erfassen und in Förderrichtung mitnehmen. Im zweiten Kreisbogensegment einer Umdrehung, wo die Bearbeitungswerkzeuge keinen Bodenkontakt und einen Abstand zur Bodenfläche aufweisen, können die Bearbeitungswerkzeuge damit insbesondere auch solches pflanzliche Material mitnehmen, das noch auf Stoppeln aufliegt oder steht und erst noch auf die Bodenfläche herunter gebracht werden muss.

Nach einer Ausgestaltung der Erfindung weist ein Bearbeitungswerkzeug an zumindest einem seiner Enden eine nach oben gebogene Kante auf. Die nach Art einer Skispitze nach oben gebogene Kante stellt sicher, dass ein jeweiliges Bearbeitungswerkzeug bei einer Rotationsbewegung nicht stumpf auf ein eventuell im Bodenbereich befindliches Hindernis trifft, sondern auf dieses auflaufen und dadurch darüber hinweg gleiten kann. Dadurch verringert sich das Risiko, dass das Bearbeitungswerkzeug bei der Benutzung beschädigt werden könnte.

Nach einer Ausgestaltung der Erfindung weist das Bearbeitungswerkzeug an seiner Unterseite eine Anzahl von zahnartig ausgebildeten Vorsprüngen auf. Die Vorsprünge dienen dem Zweck, den Übergangsbereich der Stängel zu den Wurzeln bei der Bearbeitung zu treffen und so zu schädigen, dass die Pflanzen nicht neu austreiben und leichter verrotten. Auch Unkraut und aufgehende Verlustkörner aus der vorangegangenen Ernte können dadurch besonders mechanisch geschädigt und an einem Aufwuchs gehindert werden.

Nach einer Ausgestaltung der Erfindung sind die Bearbeitungswerkzeuge so an einem Arbeitsorgan ausgebildet und angeordnet, dass zwischen jeweils zwei in Umfangsrichtung des Arbeitsorgans benachbarten Bearbeitungswerkzeugen ein offener Freiraum verbleibt. Durch den offenen Freiraum kann bei der Vorfahrt der Vorrichtung zunächst Grüngut an der Vorderseite des Arbeitsorgans in dessen Hüllkreis hineingelangen. Dort wird es von der Bearbeitungswerkzeugen erfasst, weiter befördert und dabei bearbeitet. Auf der Rückseite der Vorrichtung kann das in den Hüllkreis gelangte Grüngut wieder aus dem Hüllkreis herausrutschen, insbesondere, wenn die Bearbeitungswerkzeuge keinen Bodenkontakt mehr haben. Der Freiraum zwischen benachbarten Bearbeitungswerkzeugen erhöht also das Volumen an bearbeiteter Pflanzenmasse, ohne dass dabei das Risiko steigt, dass sich die Vorrichtung mit aufgenommenem Grüngut zusetzen könnte.

Nach einer Ausgestaltung der Erfindung sind die Tragarme um eine Schwenkachse beweglich gelagert, die Tragarme weisen jeweils einen Stützhebel auf, über den der jeweilige Tragarm in einer eingefederten Stellung gegen ein Stützelement abgestützt ist, und das Stützelement ist druckelastisch ausgebildet, so dass es eine Einfederbewegung des Tragarms in eine eingefederte Stellung des Tragarms ermöglicht, wobei das Stützelement bei der Einfederbewegung des Tragarms Rückstellkräfte aufbaut, durch die der Tragarm in entlastetem Zustand zumindest teilweise in eine ausgefederte Stellung zurückbeweglich ist. Als Stützelement kann beispielsweise ein ringförmiger Körper wie beispielsweise ein Gummireifen verwendet werden. Das elastomere Material des Gummireifens ermöglicht es, dass sich der Stützhebel bei einer Einfederbewegung in die Form des Gummireifens eindrückt, während sich der Tragarm im Bereich des ersten Kreisbogensegments befindet. Gelangt der zugehörige Tragarm in den Bereich des zweiten Kreisbogensegments, kann der Stützhebel wieder aus der Raumform des Gummireifens ausfedern. Der Gummireifen kann ganz oder teilweise mit einem Ballast befüllt sein, wie Sand oder Wasser, um die Vorrichtung zusätzlich zu beschweren. Der Ballast kann auch dazu genutzt sein, sonst mögliche größere Einfederbewegungen zu limitieren.

Nach einer Ausgestaltung der Erfindung sind die Tragarme und/oder die Bearbeitungswerkzeuge über ein beweglich mit ihnen verbundenes Koppelelement miteinander verbunden. Durch das Koppelelement können die Tragarme und/oder die Bearbeitungswerkzeuge während des Bodenkontaktes bei unebenen Bodenverhältnissen nicht so leicht vom Boden abheben und springen, weil sie über das Koppelelement mit benachbarten Tragarmen und/oder Bearbeitungswerkzeugen verbunden sind. Das Koppelelement kann beispielsweise als ein starrer Ring oder ein ringförmiges Kabel ausgebildet sein, der über Haken mit den Tragarmen und/oder Bearbeitungswerkzeugen lose verbunden ist.

Nach einer Ausgestaltung der Erfindung ist der Nabenkörper auf seiner dem Boden zugewandten Unterseite mit einem Gleitelement abgedeckt. Das Gleitelement hilft dabei, den Aufbau eines Pflanzen-/Erdgemisches unter dem Arbeitsorgan zu vermindern. Es füllt den Hohlraum zwischen den Tragarmen teilweise aus. Dadurch kann sich in diesem Bereich kein Material ansammeln. Es ermöglicht es dem Nabenkörper auch, bei der Bewegung über den Boden über eventuelle Hindernisse hinweg zu gleiten, wenn diese bis in die Höhe des Nabenkörpers aufragen sollten. Das Gleitelement weist bevorzugt eine zum Boden hin geschlossene Oberfläche und seitlich abgerundete Außenkonturen auf, durch die es bei einem Kontakt zu einem Hindernis auf dem Hindernis aufgleitet, anstatt damit stumpf zu kollidieren. Das Gleitelement kann zudem aus einem flexiblen Material hergestellt sein, wie beispielsweise Gummi oder einem weichen Kunststoff, um eventuelle Stöße abzudämpfen.

Nach einer Ausgestaltung der Erfindung weist ein Arbeitsorgan zumindest sechs Tragarme auf. Je mehr Tragarme die Vorrichtung aufweist, umso intensiver werden die zu bearbeitenden Pflanzenbestandteile bearbeitet. Bei sechs oder mehr Tragarmen ergibt sich ein insgesamt gutes Bearbeitungsergebnis.

Nach einer Ausgestaltung der Erfindung weist eine Vorrichtung mehrere über die Arbeitsbreite der Vorrichtung verteilte Arbeitsorgane auf. Durch die Verteilung mehrerer Arbeitsorgane über die Arbeitsbreite einer Vorrichtung kann eine hohe Schlagkraft erzielt werden, bei der auch die personellen und leistungsmäßigen Reserven des Trägerfahrzeugs und seiner Bedienung besser ausgenutzt werden. Die Arbeitsorgane können beispielsweise in einer einzigen Reihe angeordnet sein, oder es werden Arbeitsorgane in mehreren Reihen hintereinander in der Vorrichtung angeordnet. Die Drehachsen der verschiedenen Arbeitsorgane können auch in unterschiedliche Richtungen zur Vertikalen angewinkelt gehalten sein. Die mehreren Arbeitsorgane können in Querrichtung verlagerbar an einem Rahmen der Vorrichtung angeordnet sein, so dass die Vorrichtung auch auf Schlägen mit unterschiedlichen Reihenweiten jeweils individuell angepasst eingesetzt werden kann. Die Arbeitsorgane bei mehreren Reihen hintereinander können in Querrichtung versetzt zueinander angeordnet sein, um die gesamte zu bearbeitende Fläche besser abzudecken, oder die Arbeitsorgane sind direkt hintereinander angeordnet, um die Intensität der Stoppelbearbeitung zu erhöhen.

Nach einer Ausgestaltung der Erfindung sind die Arbeitsorgane beweglich mit dem Rahmen verbunden. Insbesondere wenn mehrere Arbeitsorgane an einer Vorrichtung vorgesehen sind, ermöglicht die bewegliche Verbindung es den Arbeitsorganen, sich genauer und individueller der jeweiligen Bodenkontur anzupassen und trotz einer größeren Arbeitsbreite auch auf der Teilarbeitsbreite des jeweiligen Arbeitsorgans die dort vorzufindende Arbeitsebene genau zu treffen.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand von Ausführungsbeispielen näher erläutert werden. Es zeigen:
- Fig. 1:: eine Ansicht auf eine Vorrichtung von oben,
- Fig. 2:: eine Ansicht auf die in Fig. 1 gezeigte Vorrichtung aus einer Ansicht von schräg unten,
- Fig. 3:: eine Ansicht auf die in Fig. 1 gezeigte Vorrichtung aus einer Ansicht von vorne,
- Fig. 4:: eine Ansicht auf ein Arbeitsorgan von der Seite in der Außerbetriebsstellung,
- Fig. 5:: eine Ansicht auf ein Arbeitsorgan von hinten in der Betriebsstellung,
- Fig. 6:: eine Ansicht auf ein Arbeitsorgan von oben,
- Fig. 7:: das in Fig. 6 gezeigte Arbeitsorgan aus einer Ansicht von unten,
- Fig. 8:: eine abgewandelte Ausführungsform eines Arbeitsorgans,
- Fig. 9:: eine weitere abgewandelte Ausführungsform eines Arbeitsorgans, bei dem die Abstützung der Tragarme flexibel ist,
- Fig. 10:: eine andere Perspektive auf das in Fig. 9 gezeigte Arbeitsorgan,
- Fig. 11:: eine Ansicht von oben auf das in den Fig. 9 und 10 gezeigte Arbeitsorgan, und
- Fig. 12:: eine Querschnittsansicht auf ein Arbeitsorgan mit einem Gleitelement.

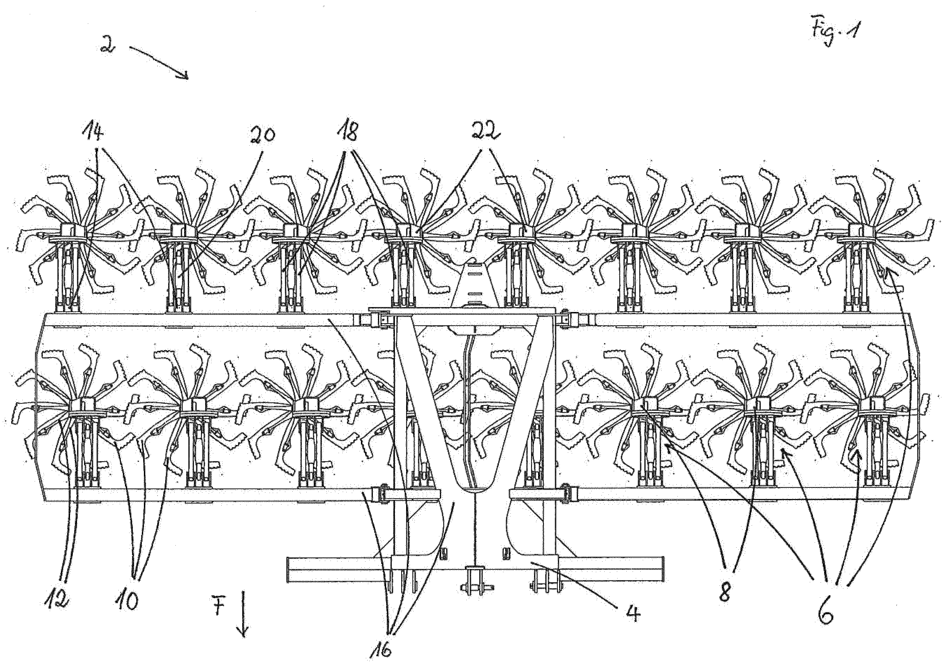

In Fig. 1 ist eine Vorrichtung 2 aus einer Ansicht von oben gezeigt. Die Vorrichtung 2 besteht im Wesentlichen aus einer Tragvorrichtung 4, über die im Ausführungsbeispiel insgesamt sechzehn Arbeitsorgane 6 gehalten sind. Im Ausführungsbeispiel sind die sechzehn Arbeitsorgane 6 in zwei Reihen angeordnet. Während des Gebrauchs wird die Vorrichtung 2 in Fahrtrichtung F bewegt. Dabei wird die Vorrichtung 2 von einem zeichnerisch nicht näher dargestellten Trägerfahrzeug gehalten. Für die Nutzung der Vorrichtung 2 wird diese über die Tragvorrichtung 4 so weit auf den Boden abgesenkt, dass einige der an den Arbeitsorganen 6 ausgebildeten Bearbeitungswerkzeuge 10 zumindest teilweise einen Bodenkontakt haben.

Die Arbeitsorgane 6 sind jeweils um Drehachsen 8 drehbar. Die Drehachsen 8 sind jeweils zur Vertikalen um einige Winkelgrade gekippt. Der Kippwinkel sollte einige Winkelgrade quer zur Fahrtrichtung betragen, um auf diese Weise in der Betriebsstellung der Vorrichtung 2 einige Bearbeitungswerkzeuge 10 eines jeweiligen Arbeitsorgans auf den Boden gedrückt zu halten, wobei andere Bearbeitungswerkzeuge, die durch den Kippwinkel in einer höheren Position stehen, keinen Bodenkontakt haben. Zusätzlich kann die Drehachse 8 eines entsprechenden Arbeitsorgans 6 auch noch in oder entgegen der Fahrtrichtung um einige Winkelgrade zur Vertikalen gekippt gehalten sein.

Die Bearbeitungswerkzeuge 10 eines Arbeitsorgans 6 sind jeweils an zugehörigen Tragarmen 12 gehalten, die sich in radialer Richtung von der Drehachse 8 eines Arbeitsorgans 6 weg erstrecken. Die Tragarme 12 sind an ihrem drehachsenseitigen Ende mit einem Nabenkörper 24 und an ihrem der Drehachse 8 abgewandten Ende mit den Bearbeitungswerkzeugen 10 verbunden.

Die Arbeitsorgane 6 sind jeweils über einen Befestigungsbock 14 mit dem Rahmen 16 verbunden. Im Ausführungsbeispiel ist der Befestigungsbock 14 über Schwingen 18 mit dem Rahmen 16 beweglich verbunden. Zusätzlich können noch Stoßdämpfer 20 vorgesehen sein, durch die eventuelle Höhenbewegungen der Arbeitsorgane 6 gedämpft werden. Die Stoßdämpfer 20 können beispielsweise auch als Hydraulikzylinder ausgebildet sein, die an einen Hydraulikkreislauf angeschlossen sind, über den das Federverhalten der Arbeitsorgane 6 steuerbar und/oder regelbar ist.

An den Befestigungsböcken 14 ist im Ausführungsbeispiel jeweils eine Befestigungskonsole 22 angebracht, mit der die Drehachse 8 eines Arbeitsorgans 6 verbunden ist. Im Ausführungsbeispiel sind die Befestigungskonsolen 22 in einer zur Vertikalen schrägen Stellung gezeigt, wobei die Drehachsen 8 der Arbeitsorgane 6 entsprechend schräg zur Vertikalen angeordnet sind. Aus der Schrägstellung der Drehachsen 8 ergibt sich, dass nur einige der Bearbeitungswerkzeuge 10 eines jeweiligen Arbeitsorgans 6 in der Betriebsstellung der Vorrichtung 2 einen Kontakt zum Boden haben.

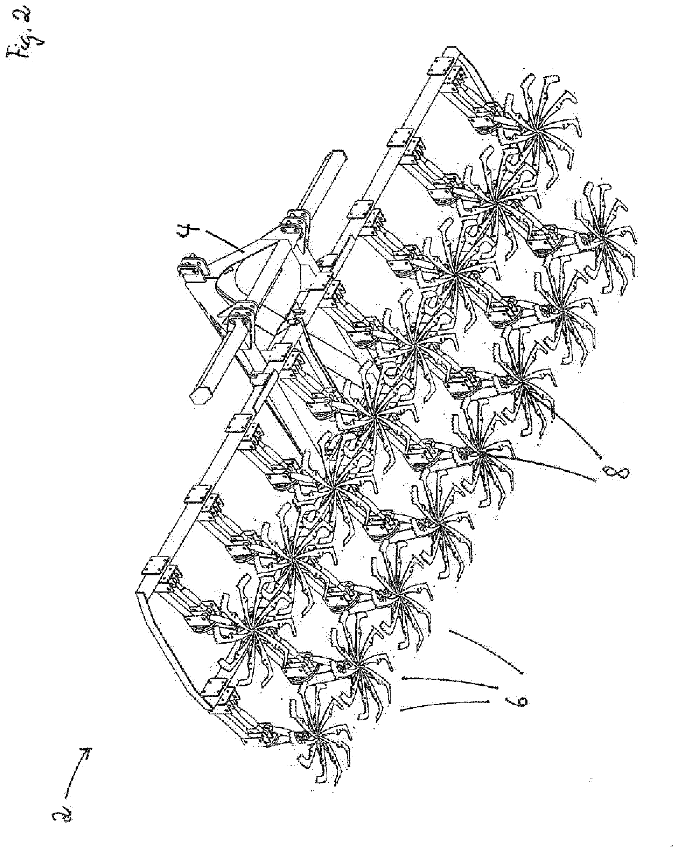

In Fig. 2 ist die in Fig. 1 dargestellte Vorrichtung aus einer Ansicht von schräg unten gezeigt. Aus der Ansicht von schräg unten ist die Schrägstellung der jeweiligen Arbeitsorgane 6 im Verhältnis zur Vertikalen erkennbar. In Fig. 2 ist außerdem erkennbar, dass die Tragvorrichtung 4 beispielsweise als eine Dreipunktaufhängung ausgebildet sein kann, die bei landwirtschaftlichen Traktoren zum üblichen Ausstattungsumfang zählt.

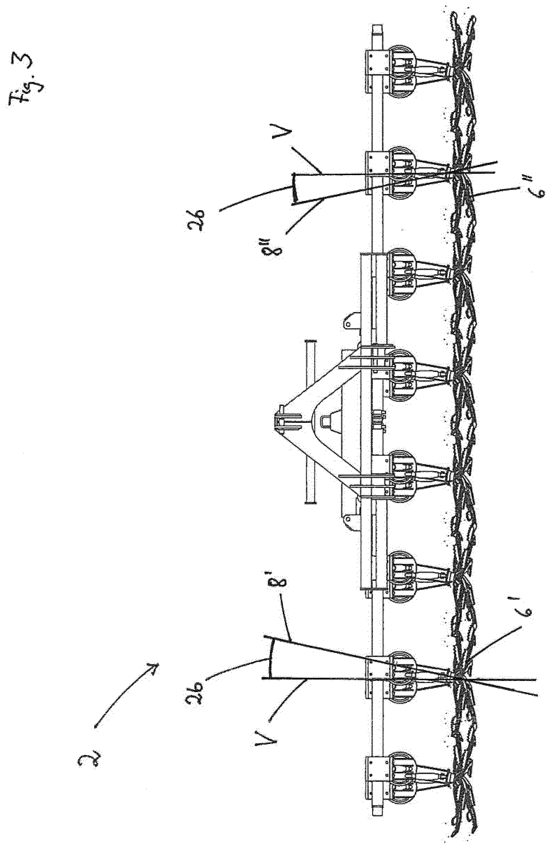

In Fig. 3 ist die Vorrichtung 2 aus einer Ansicht von vorne gezeigt. Es ist aus dieser Ansicht erkennbar, dass einige der Bearbeitungswerkzeuge 10 in einer tieferen Ebene gehalten sind als andere Bearbeitungswerkzeuge 10 desselben Arbeitsorgans 6. Für das Arbeitsorgan 6' ist gezeigt, dass die Drehachse 8' um ein Winkelmaß 26 zur Vertikalen V in Querrichtung zur Fahrtrichtung F der Vorrichtung 2 gekippt ist. Während die Drehachse 8' in Fig. 3 zur Vertikalen V nach rechts gekippt ist, ist die Drehachse 8" zur Vertikalen V des Arbeitsorgans 6" nach links gekippt. Durch die unterschiedlichen Kipprichtungen der Drehachsen 8', 8" ergeben sich unterschiedliche Drehrichtungen der jeweiligen Arbeitsorgane 6', 6". Während bei dem Arbeitsorgan 6' die rechts von der Drehachse 8' befindlichen Bearbeitungswerkzeuge 10 dem Boden näher sind als die auf der linken Seite der Drehachse 8' gelegenen Bearbeitungswerkzeuge 10, verhält sich dies bei dem Arbeitsorgan 6" genau umgekehrt.

An dieser Stelle sei darauf hingewiesen, dass in den Fig. 1 - 3 die Bearbeitungswerkzeuge 10 der Arbeitsorgane 6 in der ersten und zweiten Reihe aus Gründen der zeichnerischen Vereinfachung zwar gleich aussehen. Wegen des anderen Anstellwinkels und der unterschiedlichen Drehrichtungen kann es aber von Vorteil sein, die Bearbeitungswerkzeuge 10 in Abhängigkeit von der Drehrichtung jeweils angepasst unterschiedlich auszugestalten.

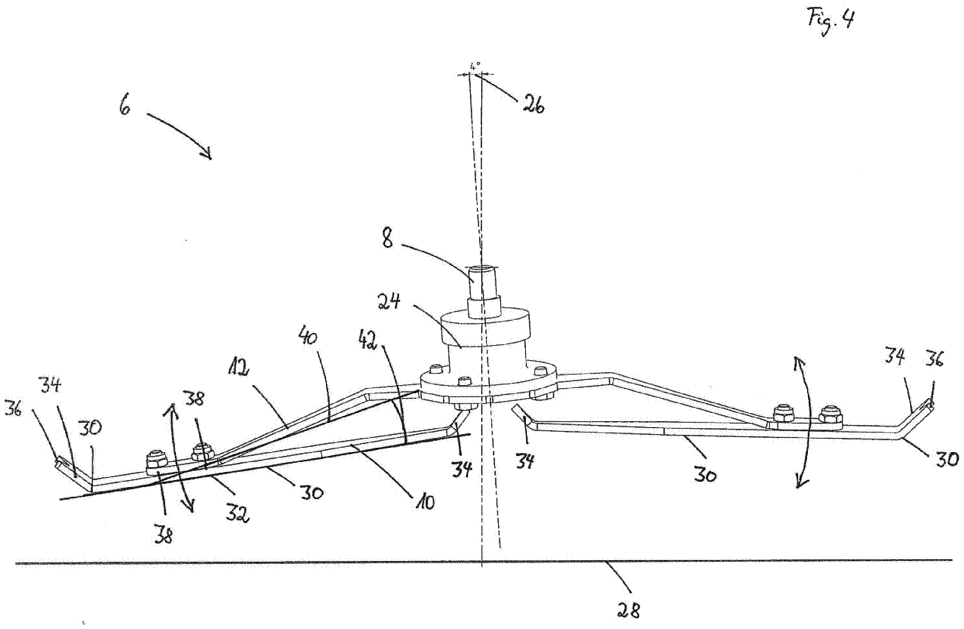

In Fig. 4 ist ein Arbeitsorgan 6 in der Außerbetriebsstellung gezeigt, in der alle Bearbeitungswerkzeuge 10 keinen Kontakt zur Bodenfläche 28 haben. Die Drehachse 8 ist in dem in Fig. 4 dargestellten Ausführungsbeispiel um ein Winkelmaß 26 von 4° zur Vertikalen V angewinkelt. Dadurch ist das Bearbeitungswerkzeug 10, das links zur Drehachse 8 liegt, in einer räumlich tieferen Ebene als das rechts von der Drehachse 8 gezeigte Bearbeitungswerkzeug 10.

In der Ansicht in Fig. 4 ist gut erkennbar, dass sich der Tragarm 12 vom Nabenkörper 24 aus in radialer Richtung weg von der Drehachse 8 erstreckt. Am freien Ende des Tragarms 12 ist jeweils ein Bearbeitungswerkzeug 10 angebracht. Wie die beiden Doppelpfeile an den freien Enden der Tragarme 12 andeuten, sind die Tragarme 12 flexibel in axialer Richtung der Drehachse 8 ausgestaltet. Dadurch können die Tragarme 12 jeweils insbesondere nach oben hin einfedern, wenn das zugehörige Bearbeitungswerkzeug 10 in der Betriebsstellung an der Vorrichtung 2 einen Bodenkontakt erhält.

An den Bearbeitungswerkzeugen 10 sind jeweils mehrere Bearbeitungskanten 30 ausgebildet. Zwei Bearbeitungskanten 30 befinden sich jeweils an der Langseite eines leistenförmig ausgebildeten Bearbeitungswerkzeuges 10. Außerdem ist noch am äußeren Ende der Bearbeitungswerkzeuge 10 eine Bearbeitungskante 30 ausgebildet, an der entlang die nach oben gebogene Kante 34 umgebogen ist. An den nach außen weisenden Kanten 34 sind außerdem noch Mitnehmerzähne 36 ausgebildet.

Die an den Bearbeitungswerkzeugen 10 ausgebildeten Arbeitskanten 30 definieren über Ihre Länge hinweg eine Arbeitsebene 32, in der von ihnen bei der Auflage auf der Bodenfläche 28 mit ihnen in Kontakt kommende Pflanzenteile bearbeitet werden. Wenn das Bearbeitungswerkzeug 10 auf der Bodenfläche 28 plan aufliegt, sind die Arbeitskanten 30, die Arbeitsebenen 32 sowie die Bodenfläche 28 planparallel zueinander.

In dem in Fig. 4 gezeigten Ausführungsbeispiel ist erkennbar, dass die Bearbeitungswerkzeuge 10 am freien Ende der Tragarme 12 befestigt sind und sich ein Teil einer jeweiligen Arbeitskante 30 vom Befestigungspunkt 38 des Bearbeitungswerkzeugs 10 am Tragarm 12 gesehen in Richtung der Drehachse 8 des Arbeitsorgans 6 erstreckt. Dadurch wird auch innerhalb des Hüllkreises eines Arbeitsorgans 6 mit den Arbeitskanten 30 intensiv Pflanzenmaterial bearbeitet.

In dem in Fig. 4 gezeigten Ausführungsbeispiel befinden sich die Befestigungspunkte 38 am äußeren Rand des mittleren Bereiches eines Bearbeitungswerkzeuges. Bei einer noch weiter nach außen reichenden Lage eines Befestigungspunktes 38 würden sich zu den inneren Enden der Bearbeitungswerkzeuge 10 erhebliche Hebelkräfte ergeben, die durch eine günstigere Positionierung des Befestigungspunktes 38 vermeidbar sind.

Vom Verbindungspunkt des Tragarms 12 zum Nabenkörper 24 bis zum Befestigungspunkt 38 ergibt sich für jeden Tragarm 12 eine Tragachse 40, zu der die Arbeitskante 30 eines Bearbeitungswerkzeuges 10 im Anstellwinkel 42 angestellt ist. Durch den Anstellwinkel 42 ist die Drehachse 8 mit ihrem unteren Ende in einer Höhe gelagert, in der sie einen noch ausreichenden Abstand zur Bodenfläche 28 bewahrt, um nicht bei Arbeitsvorgängen mit der Bodenfläche zu kollidieren.

In dem in Fig. 4 dargestellten Ausführungsbeispiel sind die Bearbeitungswerkzeuge 10 über doppelte Verschraubungen mit dem zugehörigen Tragarm 12 verbunden. Eine solche Doppelverschraubung lässt keine Relativbewegung zwischen den Tragarmen 12 und dem Bearbeitungswerkzeug 10 zu. Anstelle einer Doppelverschraubung können aber auch andere Verbindungsmittel verwendet werden, die je nach Ausgestaltung auch eine Bewegung des Bearbeitungswerkzeuges 10 im Verhältnis zum Tragarm 12 zulassen.

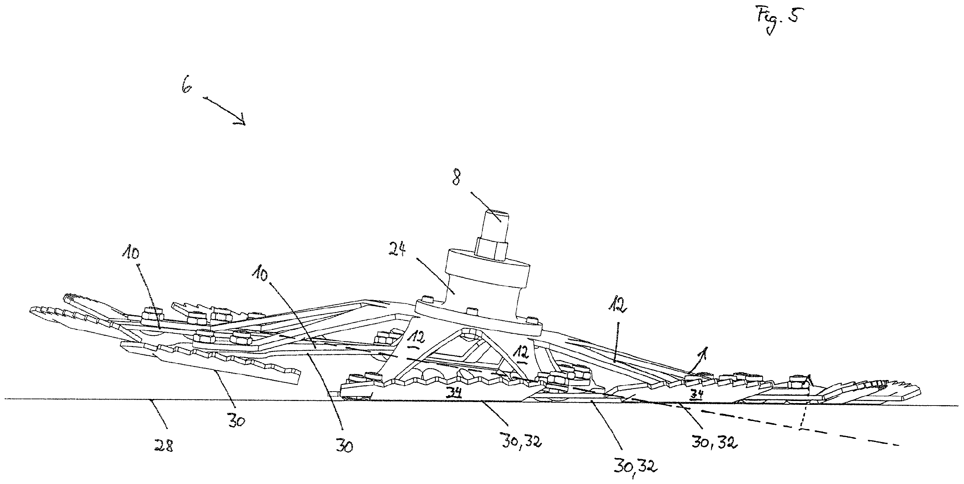

In Fig. 5 ist ein Arbeitsorgan 6 in der Betriebsstellung gezeigt. In dieser Ansicht ist erkennbar, dass die sich rechts von der Drehachse 8 befindlichen Tragarme 12 abweichend von der mit einer gestrichelten Linie angedeuteten Normallage nach oben hin in die durch den Pfeil angedeutete Richtung eingefedert sind, während sich die links von der Drehachse 8 befindlichen Tragarme noch in ihrer Normallage befinden.

Die an den eingefederten Tragarmen 12 befestigten Bearbeitungswerkzeuge 10 liegen mit ihren Arbeitskanten 30 als Arbeitsebenen 32 plan auf der Bodenfläche 28 auf. In der Ansicht ist erkennbar, dass die Einfederbewegung der rechts von der Drehachse 8 gezeigten Tragarme 12 mehr als ein Zwanzigstel des Außendurchmessers der größten radialen Ausdehnung der Bearbeitungswerkzeuge beträgt. Bei einer solchen Einfederrate können Kreisbogenanteile des ersten Kreisbogenabschnitts 44 von mehr als 45° erreicht werden.

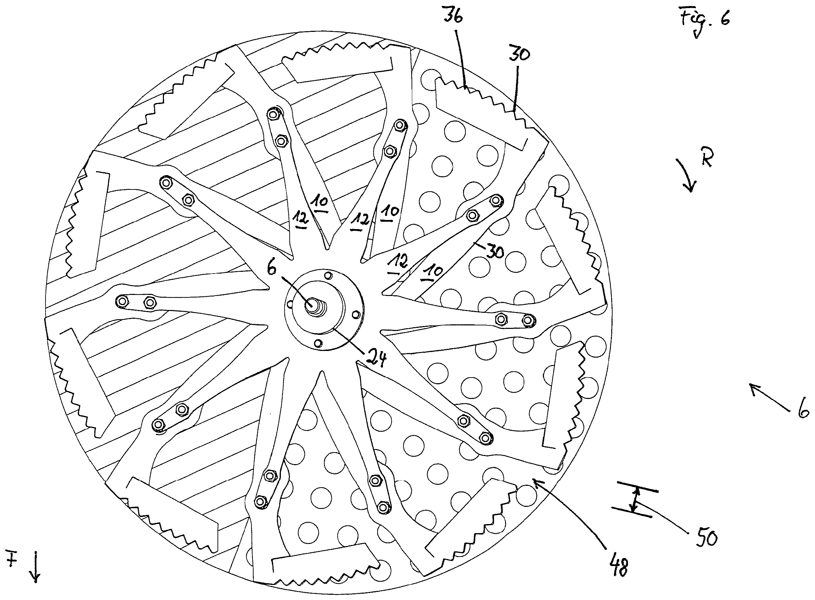

In Fig. 6 ist eine Ansicht von oben auf ein Arbeitsorgan 6 gezeigt. Das Arbeitsorgan wird während des Betriebs in die Fahrtrichtung F bewegt. Das Arbeitsorgan 6 ist dazu vorgesehen, sich im Betrieb in die Rotationsrichtung R zu drehen. Aus der Ansicht von oben sind insgesamt zehn Tragarme 12 erkennbar, an denen jeweils ein Bearbeitungswerkzeug 10 befestigt ist. Jedes Bearbeitungswerkzeug 10 gemäß des in Fig. 6 gezeigten Ausführungsbeispiels verfügt über vier Arbeitskanten 30, von denen sich zwei an den Längskanten des Bearbeitungswerkzeuges 10 entlang erstrecken, sowie eine weitere Arbeitskante 30, die sich am äußeren Ende entlang des Außenumfangs des Arbeitsorgans 6 erstreckt und im Ausführungsbeispiel zusätzlich eine Verzahnung mit Mitnehmerzähnen 36 aufweist, sowie eine weitere Arbeitskante 30 entlang der Innenseite des Steges mit der Verzahnung.

Aus der Ansicht von oben ist der schraffierte Bereich erkennbar, der das erste Kreisbogensegment 44 erkennbar macht, in dem die Bearbeitungswerkzeuge 10 in der Betriebsstellung der Vorrichtung einen Bodenkontakt haben, sowie das zweite Kreisbogensegment 46, in dem die Bearbeitungswerkzeuge 10 während einer Umdrehung keinen Bodenkontakt mehr haben. Im Ausführungsbeispiel sind das erste Kreisbogensegment 44 und das zweite Kreisbogensegment 46 etwa gleich groß.

Das zweite Kreisbogensegment 46 ist durch schemenhafte Kreise angedeutet, die dem zweiten Kreisbogensegment unterlegt sind.

In der Ansicht von oben ist erkennbar, dass zwischen zwei in Umfangsrichtung des Arbeitsorgans 6 benachbarten Bearbeitungswerkzeugen 10 ein offener Freiraum 48 ausgebildet ist. Das Abstandsmaß 50 kann je nach konkreten Anforderungen größer oder kleiner ausgebildet werden.

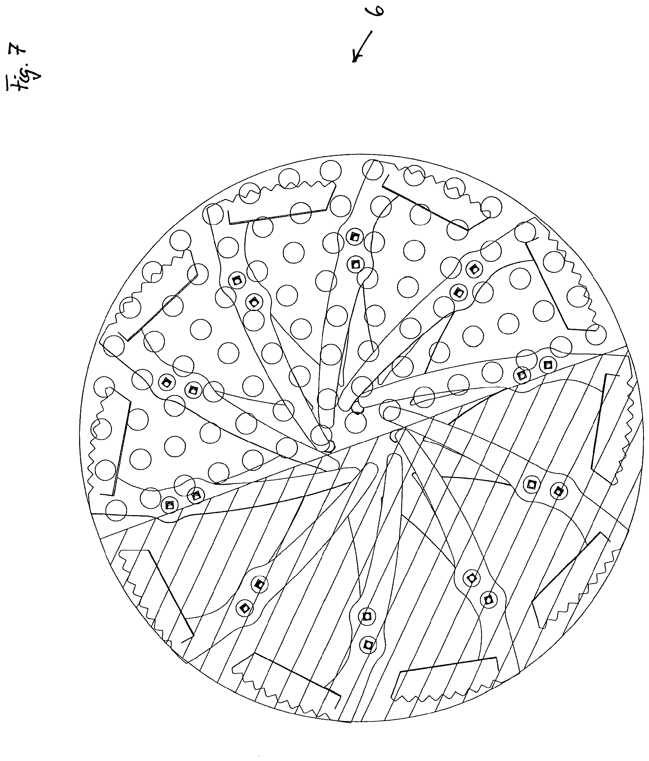

In Fig. 7 ist das in Fig. 6 gezeigte Arbeitsorgan 6 aus einer Ansicht von unten gezeigt. Aus der Ansicht von unten ist erkennbar, dass sich die Bearbeitungswerkzeuge 10 mit ihren nach innen weisenden Enden bis in den Bereich des Nabenkörpers 24 hinein erstrecken.

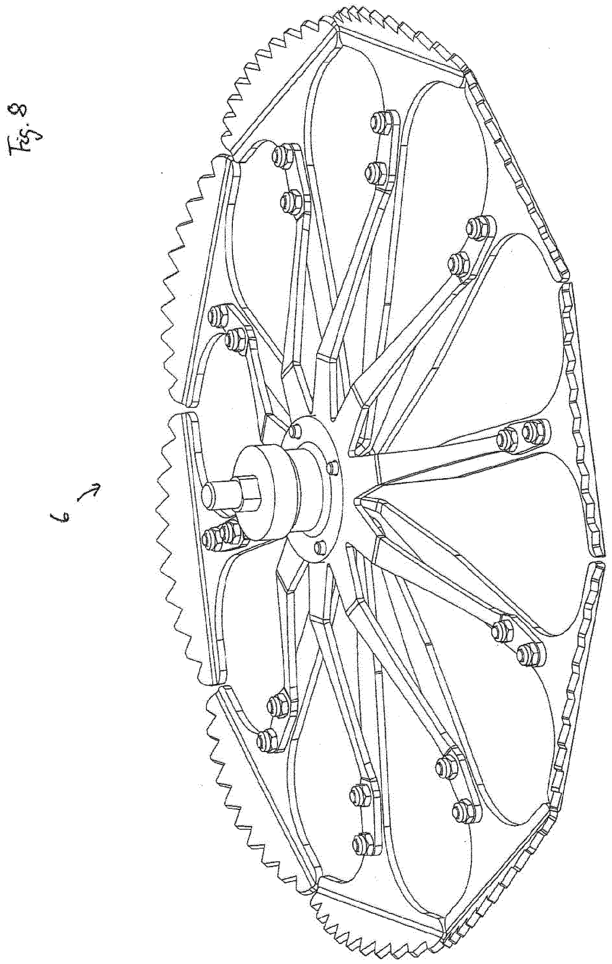

Die Fig. 8 zeigt eine abgewandelte Ausführungsform eines Arbeitsorgans 6, bei dem insbesondere die Bearbeitungswerkzeuge 10 eine andere Gestaltung aufweisen.

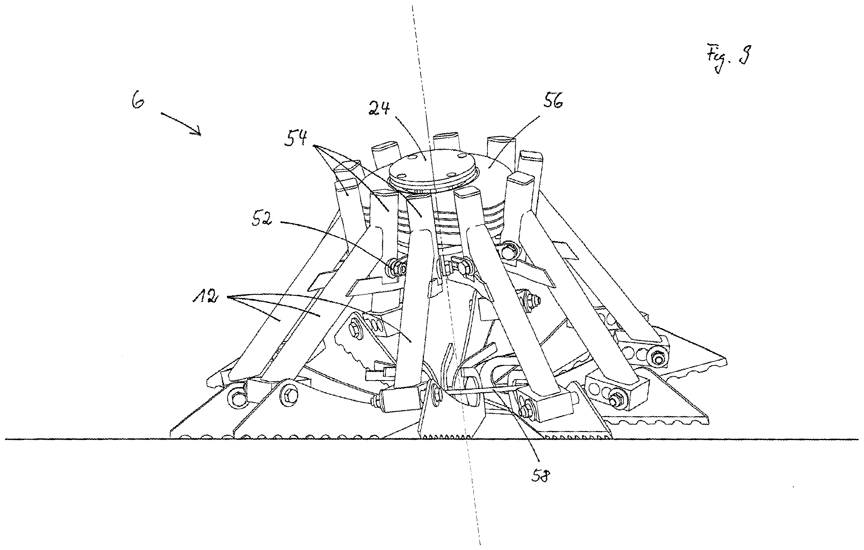

In Fig. 9 ist eine weitere abgewandelte Ausführungsform eines Arbeitsorgans 6 gezeigt, bei dem die Abstützung der Tragarme 12 flexibel ist. Die Tragarme 12 sind jeweils in Schwenkachsen 52 am Nabenkörper 24 gelagert. An dem dem Nabenkörper 24 zugewandten Ende eines Tragarms 12 befindet sich jeweils ein Stützhebel 54, der sich bei einer Einfederbewegung des jeweiligen Tragarms 12 im Bereich des ersten Kreisbogensegments in ein Stützelement 56 eindrückt. In dem in Fig. 9 gezeigten Ausführungsbeispiel handelt es sich bei dem Stützelement 56 um einen Gummireifen, der durch einige der Stützhebel 54 eingedrückt ist.

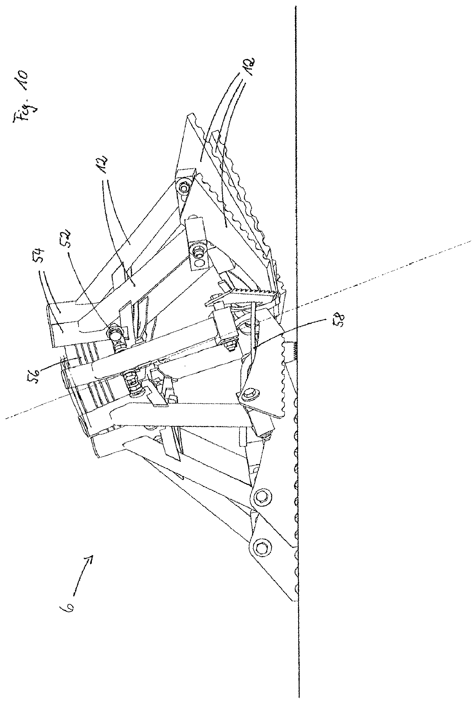

In Fig. 10 ist das in Fig. 9 gezeigte Arbeitsorgan aus einer anderen Perspektive gezeigt. In dieser Ansicht ist erkennbar, dass die Stützhebel 54 der Tragarme 12, die sich nicht im ersten Kreisbogensegment befinden, das Stützelement auch nicht eindrücken.

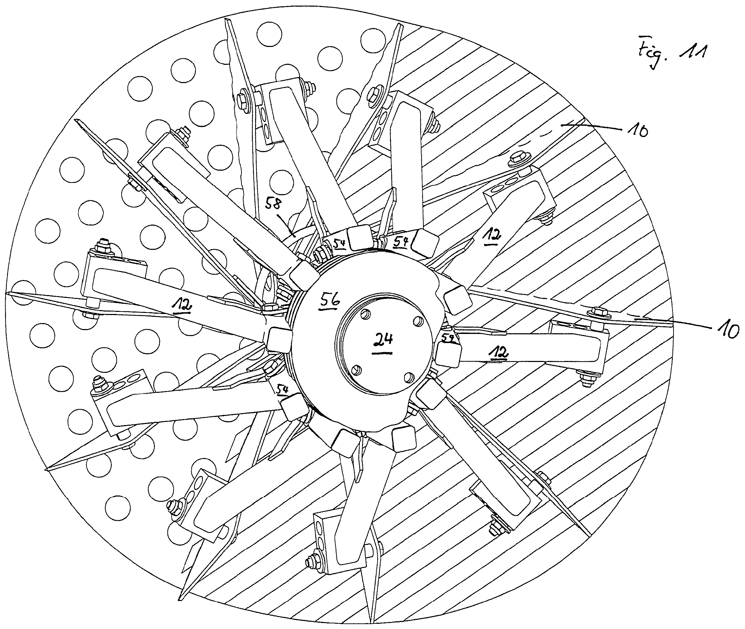

In Fig. 11 ist eine Ansicht von oben auf das in den Fig. 9 und 10 gezeigte Arbeitsorgan 6 gezeigt. Aus der Ansicht von oben ist gut erkennbar, dass die Stützhebel 54 der sich im ersten Kreisbogensegment befindlichen Tragarme 12 das Stützelement 56 eindrücken, während die sich im zweiten Kreisbogensegment befindlichen Stützhebel 54 das Stützelement 56 nicht eindrücken.

In den Fig. 9 - 11 ist noch ein Koppelelement 58 gezeigt, das im Ausführungsbeispiel als ein Ring ausgebildet ist. Der Ring verbindet die Bearbeitungswerkzeuge 10 miteinander, indem er in Haken eingehakt ist, die sich auf der Oberseite der Bearbeitungswerkzeuge 10 befinden. Der umlaufende Ring behindert eine Ausweichbewegung eines Bearbeitungswerkzeugs 10 nach oben hin, weil er auch von den benachbarten Bearbeitungswerkzeugen 10 gehalten ist. Der Ring lässt den Bearbeitungswerkzeugen 10 andererseits aber noch ausreichend Bewegungsraum, damit die Bearbeitungswerkzeuge 10 während eines Umlaufs in einem gewünschten Maß ein- und ausfedern können. Um diese Bewegungsspielräume zu ermöglichen, ist der Ring nicht starr mit den Bearbeitungswerkzeugen verbunden, sondern nur lose in die jeweiligen Haken eingehängt.

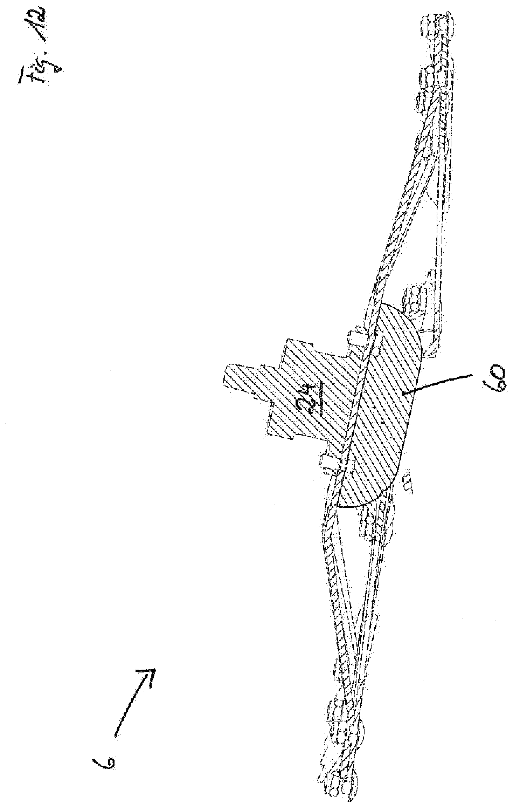

In Fig. 12 ist ein Arbeitsorgan 6 gezeigt, bei dem auf die Unterseite des Nabenkörpers 24 ein Gleitelement 60 aufgesetzt ist. Das Gleitelement 60 weist im Querschnitt eine Art umgekehrter Pilzform auf. Das Gleitelement 60 schützt den Nabenkörper 24 an seiner Unterseite gegen Kollisionen mit Hindernissen. Durch die gerundeten seitlichen Ränder kann das Gleitelement 60 bei einem Anstoß an ein Hindernis leichter darüber hinweg gleiten.

## Patentansprüche

1. Vorrichtung (2) zur Bearbeitung von auf einer Bodenfläche (28) befindlichen Pflanzenteilen, mit einer Tragvorrichtung (4), über die die Vorrichtung (2) zwischen einer ausgehobenen Außerbetriebsstellung und einer abgesenkten Betriebsstellung wahlweise hin und her verlagerbar und in der Betriebsstellung mit einem Auflagedruck auf der Bodenfläche (28) gehalten ist, zumindest einem drehbar gelagerten Arbeitsorgan (6), dessen Drehachse (8) in der Betriebsstellung der Vorrichtung (2) zur Vertikalen (V) in einem Winkelmaß (26) geneigt ist, wobei am Arbeitsorgan (6) eine Anzahl von Bearbeitungswerkzeugen (10) befestigt sind, die in der Betriebsstellung der Vorrichtung (2) im Verlauf einer Umdrehung des Arbeitsorgans (6) in einem ersten Kreisbogensegment (44) mit einem Bodenkontakt und in einem zweiten Kreisbogensegment (46) ohne einen Bodenkontakt rotieren, am Arbeitsorgan (6) eine Anzahl von Tragarmen (12) ausgebildet sind, die sich von der Drehachse (8) aus in radialer Richtung erstrecken, ein oder mehrere Bearbeitungswerkzeuge (10) jeweils an einem Tragarm (12) befestigt sind, und die Tragarme (12) über ihre Baulänge in axialer Richtung der Drehachse (8) und/oder die Abstützung der Tragarme (12) eine Flexibilität aufweisen, durch die der Tragarm (12) in der Betriebsstellung der Vorrichtung (2) bei auf der Bodenfläche (28) aufgesetztem zugehörigem Bearbeitungswerkzeug (10) unter Einwirkung des Auflagedrucks im ersten Kreisbogensegment (44) eingefedert ist, und das Bearbeitungswerkzeug (10) an zumindest einer Seite eine in einer Arbeitsebene (32) starr ausgebildete Arbeitskante (30) aufweist, die in der Betriebsstellung der Vorrichtung (2) unter dem auf den zugehörigen Tragarm (12) wirkenden Auflagedruck in dem ersten Kreisbogensegment parallel zur Bodenfläche (28) und im zweiten Kreisbogensegment (46) bei unbelastetem und ausgefedertem Tragarm (12) ohne Kontakt zur Bodenfläche (20) gehalten ist,
**dadurch gekennzeichnet, dass** sich durch die flexibel
ausgestalteten Tragarme (12) und/oder die flexible Abstützung der Tragarme (12), an denen die Bearbeitungswerkzeuge (10) gehalten sind, die Form des Hüllkreises verändert, wenn ein Arbeitsorgan unter Einwirkung eines Auflagedrucks im ersten Kreisbogensegment (44) über eine Bodenfläche (28) streift und die betreffenden Tragarme (12) dadurch im Verhältnis zur Drehachse (8) des Arbeitsorgans (6) angehoben sind.

2. Vorrichtung (2) nach Anspruch 1, **dadurch gekennzeichnet, dass** die Bearbeitungswerkzeuge (10) beweglich mit den zugehörigen Tragarmen (12) verbunden sind.

3. Vorrichtung (2) nach Anspruch 1 oder 2, **dadurch gekennzeichnet, dass** die Bearbeitungswerkzeuge (10) eine Leistenform aufweisen.

4. Vorrichtung (2) nach einem der vorhergehenden Ansprüche, **dadurch gekennzeichnet, dass** die Arbeitsebene (32) der Arbeitskante (30) eines jeweiligen Bearbeitungswerkzeugs (10) in einem Anstellwinkel (42) schräg zur Tragachse (40) des Tragarms (12) angestellt ist.

5. Vorrichtung (2) nach einem der vorhergehenden Ansprüche, **dadurch gekennzeichnet, dass** die Flexibilität der Tragarme (12) über ihre Baulänge in axialer Richtung der Drehachse (8) größer ist als in ihre Rotationsrichtung.

6. Vorrichtung (2) nach einem der vorhergehenden Ansprüche, **dadurch gekennzeichnet, dass** die Einfederbewegung eines Tragarms (12) im ersten Kreisbogensegment in der Betriebsstellung der Vorrichtung (2) mehr als 1/20 des Außendurchmessers der größten radialen Ausdehnung der Bearbeitungswerkzeuge beträgt.

7. Vorrichtung (2) nach einem der vorhergehenden Ansprüche, **dadurch gekennzeichnet, dass** die Bearbeitungswerkzeuge (10) an den freien Enden der Tragarme (12) befestigt sind und sich ein Teil einer Arbeitskante (30) an einem jeweiligen Bearbeitungswerkzeug (10) vom Befestigungspunkt des Bearbeitungswerkzeugs (10) am Tragarm (12) gesehen in Richtung der Drehachse (8) des Arbeitsorgans (6) erstreckt.

8. Vorrichtung (2) nach Anspruch 7, **dadurch gekennzeichnet, dass** sich der Befestigungspunkt (38) eines jeweiligen Bearbeitungswerkzeugs (10) am zugehörigen Tragarm (12) im mittleren Bereich des Bearbeitungswerkzeugs (10) befindet.

9. Vorrichtung (2) nach einem der vorhergehenden Ansprüche, **dadurch gekennzeichnet, dass** sich der Befestigungspunkt (38) eines jeweiligen Bearbeitungswerkzeugs (10) am zugehörigen Tragarm (12) nahe dem Flächenschwerpunkt des Bearbeitungswerkzeugs (10) befindet.

10. Vorrichtung (2) nach einem der vorhergehenden Ansprüche, **dadurch gekennzeichnet, dass** ein erstes Winkelmaß der Tragachse des jeweiligen Tragarms (12) zur Drehachse (8), ein zweites Winkelmaß der Arbeitskante (30) des Bearbeitungswerkzeugs (10) zum jeweiligen Tragarm (12), die Form des jeweiligen Tragarms (12), das Winkelmaß der Drehachse (8) zur Vertikalen, die Federrate des jeweiligen Tragarms (12) und die Form und Anbindung des jeweiligen Bearbeitungswerkzeugs (10) an den jeweiligen Tragarm (12) so gewählt sind, dass das erste Kreisbogensegment in der Betriebsstellung der Vorrichtung (2) einen Winkel von zumindest 60° abdeckt.

11. Vorrichtung (2) nach einem der vorhergehenden Ansprüche, **dadurch gekennzeichnet, dass** ein Bearbeitungswerkzeug (10) an seinem nach außen und/oder innen weisenden Ende einen oder mehrere Mitnehmerzähne (36) aufweist.

12. Vorrichtung (2) nach einem der vorhergehenden Ansprüche, **dadurch gekennzeichnet, dass** ein Bearbeitungswerkzeug (10) an zumindest einem seiner Enden eine nach oben gebogene Kante (34) aufweist.

13. Vorrichtung (2) nach einem der vorhergehenden Ansprüche, **dadurch gekennzeichnet, dass** das Bearbeitungswerkzeug (10) an seiner Unterseite eine Anzahl von zahnartig ausgebildeten Vorsprüngen aufweist.

14. Vorrichtung (2) nach einem der vorhergehenden Ansprüche, **dadurch gekennzeichnet, dass** die Bearbeitungswerkzeuge (10) so an einem Arbeitsorgan (6) ausgebildet und angeordnet sind, dass zwischen jeweils zwei in Umfangsrichtung des Arbeitsorgans (6) benachbarten Bearbeitungswerkzeugen (10) ein offener Freiraum (48) verbleibt.

15. Vorrichtung (2) nach einem der vorhergehenden Ansprüche, **dadurch gekennzeichnet, dass** die Tragarme (12) um eine Schwenkachse beweglich gelagert sind, die Tragarme (12) jeweils einen Stützhebel aufweisen, über den der jeweilige Tragarm (12) in einer eingefederten Stellung gegen ein Stützelement abgestützt ist, und das Stützelement druckelastisch ausgebildet ist, so dass es eine Einfederbewegung des Tragarms in eine eingefederte Stellung des Tragarms (12) ermöglicht, wobei das Stützelement bei der Einfederbewegung des Tragarms (12) Rückstellkräfte aufbaut, durch die der Tragarm (12) in entlastetem Zustand zumindest teilweise in eine ausgefederte Stellung zurückbeweglich ist.

16. Vorrichtung (2) nach einem der vorhergehenden Ansprüche, **dadurch gekennzeichnet, dass** die Tragarme (12) und/oder die Bearbeitungswerkzeuge (10) über ein beweglich mit ihnen verbundenes Koppelelement (58) miteinander verbunden sind.

17. Vorrichtung (2) nach einem der vorhergehenden Ansprüche, **dadurch gekennzeichnet, dass** der Nabenkörper (24) auf seiner dem Boden zugewandten Unterseite mit einem Gleitelement (60) abgedeckt ist.

18. Vorrichtung (2) nach einem der vorhergehenden Ansprüche, **dadurch gekennzeichnet, dass** ein Arbeitsorgan (6) zumindest sechs Tragarme (12) aufweist.

19. Vorrichtung (2) nach einem der vorhergehenden Ansprüche, **dadurch gekennzeichnet, dass** eine Vorrichtung (2) mehrere über die Arbeitsbreite der Vorrichtung (2) verteilte Arbeitsorgane (6) aufweist.

20. Vorrichtung (2) nach einem der vorhergehenden Ansprüche, **dadurch gekennzeichnet, dass** die Arbeitsorgane (6) beweglich mit dem Rahmen (16) verbunden sind.

## Claims

1. Device (2) for processing plant parts on a ground surface (28), comprising a carrying device (4) via which the device (2) can be moved back and forth between a raised inoperative position and a lowered operating position and is held on the floor surface (28) in the operating position with a contact pressure, at least one rotatably mounted working element (6), the axis of rotation (8) of which is inclined at an angle dimension (26) to the vertical (V) when the device (2) is in the operating position, a number of processing tools (10) being attached to the working element (6), which tools, in the operating position of the device (2) during a revolution of the working element (6), rotate in a first circular arc segment (44) with ground contact and in a second circular arc segment (46) without ground contact, a number of support arms (12) being formed on the working element (6), which arms extend from the axis of rotation (8) in the radial direction, one or more processing tools (10) each being attached to a support arm (12), and the support arms (12) having a flexibility over their overall length in the axial direction of the axis of rotation (8) and/or the support of the support arms (12) by means of which the support arm (12) is spring-compressed in the operating position of the device (2) with the associated processing tool (10) placed on the ground surface (28) under the effect of the contact pressure in the first circular arc segment (44), and the processing tool (10) having, on at least one side, a working edge (30) which is rigid in a working plane (32) and, in the operating position of the device (2), is held in the first circular arc segment parallel to the ground surface (28) under the contact pressure acting on the associated support arm (12) and is held in the second circular arc segment (46) without contact with the ground surface (20) when the support arm (12) is unloaded and extended, **characterized in that** the support arms (12), which are designed to be flexible, and/or the flexible support of the support arms (12), on which the processing tools (10) are held, change the shape of the covering circle when a working element moves over a ground surface (28) under the effect of a contact pressure in the first circular arc segment (44) and the relevant support arms (12) are thereby raised in relation to the axis of rotation (8) of the working element (6).

2. Device (2) according to claim 1, **characterized in that** the processing tools (10) are movably connected to the associated support arms (12).

3. Device (2) according to either claim 1 or claim 2, **characterized in that** the processing tools (10) have a strip shape.

4. Device (2) according to any of the preceding claims, **characterized in that** the working plane (32) of the working edge (30) of each processing tool (10) is set at an angle (42) obliquely to the support axis (40) of the support arm (12).

5. Device (2) according to any of the preceding claims, **characterized in that** the flexibility of the support arms (12) is greater over their overall length in the axial direction of the axis of rotation (8) than in their direction of rotation.

6. Device (2) according to any of the preceding claims, **characterized in that** the spring compression movement of a support arm (12) in the first circular arc segment in the operating position of the device (2) is more than 1/20 of the outer diameter of the greatest radial extension of the processing tools.

7. Device (2) according to any of the preceding claims, **characterized in that** the processing tools (10) are attached to the free ends of the support arms (12) and part of a working edge (30) on each processing tool (10) extends from the attachment point of the processing tool (10) on the support arm (12) when viewed in the direction of the axis of rotation (8) of the working element (6).

8. Device (2) according to claim 7, **characterized in that** the attachment point (38) of each processing tool (10) on the associated support arm (12) is located in the middle region of the processing tool (10).

9. Device (2) according to any of the preceding claims, **characterized in that** the attachment point (38) of each processing tool (10) on the associated support arm (12) is located near the center of mass of the processing tool (10).

10. Device (2) according to any of the preceding claims, **characterized in that** a first angle dimension of the support axis of each support arm (12) to the axis of rotation (8), a second angle dimension of the working edge (30) of the processing tool (10) to each support arm (12), the shape of each support arm (12), the angle dimension of the axis of rotation (8) to the vertical, the spring rate of each support arm (12) and the shape and connection of each processing tool (10) to each support arm (12) are selected so that the first circular arc segment covers an angle of at least 60° in the operating position of the device (2).

11. Device (2) according to any of the preceding claims, **characterized in that** a processing tool (10) has one or more driver teeth (36) on its outwardly and/or inwardly pointing end.

12. Device (2) according to any of the preceding claims, **characterized in that** a processing tool (10) has an upwardly bent edge (34) at at least one of its ends.

13. Device (2) according to any of the preceding claims, **characterized in that** the processing tool (10) has a number of tooth-like projections on its underside.

14. Device (2) according to any of the preceding claims, **characterized in that** the processing tools (10) are designed and arranged on a working element (6) such that an open free space (48) remains between two processing tools (10) which are adjacent in the circumferential direction of the working element (6).

15. Device (2) according to any of the preceding claims, **characterized in that** the support arms (12) are mounted movably about a pivot axis, the support arms (12) each have a support lever via which each support arm (12) is supported in a spring-compressed position against a support element, and the support element is designed to be pressure-elastic so that it makes a spring compression movement of the support arm into a spring-compressed position of the support arm (12) possible, the support element building up restoring forces during the spring compression movement of the support arm (12), by means of which restoring forces the support arm (12) can be moved back at least partially into an extended position in the unloaded state.

16. Device (2) according to any of the preceding claims, **characterized in that** the support arms (12) and/or the processing tools (10) are interconnected via a coupling element (58) which is movably connected to them.

17. Device (2) according to any of the preceding claims, **characterized in that** the hub body (24) is covered with a sliding element (60) on its underside facing the ground.

18. Device (2) according to any of the preceding claims, **characterized in that** a working element (6) has at least six support arms (12).

19. Device (2) according to any of the preceding claims, **characterized in that** a device (2) has a plurality of working elements (6) distributed over the working width of the device (2).

20. Device (2) according to any of the preceding claims, **characterized in that** the working elements (6) are movably connected to the frame (16).

## Revendications

1. Dispositif (2) de traitement des parties des plantes se trouvant sur une surface de sol (28), comportant un dispositif de support (4) par l'intermédiaire duquel le dispositif (2) peut être déplacé sélectivement en va-et-vient entre une position hors service relevée et une position de fonctionnement abaissée et est maintenu, dans la position de fonctionnement, sur la surface de sol (28) à une pression de contact, au moins un organe de travail (6) monté de manière à pouvoir tourner, dont l'axe de rotation (8) est incliné selon une mesure d'angle (26) par rapport à la verticale (V) dans la position de fonctionnement du dispositif (2), dans lequel un nombre d'outils de traitement (10) est fixés à l'organe de travail (6), lesquels, dans la position de fonctionnement du dispositif (2), lors de la course d'une rotation de l'organe de travail (6), tournent dans un premier segment d'arc de cercle (44) en contact avec le sol et dans un second segment d'arc de cercle (46) sans contact avec le sol, un nombre de bras de support (12) sont conçus sur l'organe de travail (6), lesquels s'étendent à partir de l'axe de rotation (8) dans la direction radiale, au moins un outil de traitement (10) est respectivement fixé à un bras de support (12), et les bras de support (12), sur leur longueur totale dans la direction axiale de l'axe de rotation (8), et/ou l'appui des bras de support (12) présentent une flexibilité au moyen de laquelle le bras de support (12) est comprimé dans la position de fonctionnement du dispositif (2) lorsque l'outil de traitement (10) associé est placé sur la surface de sol (28) sous l'effet de la pression de contact dans le premier segment d'arc de cercle (44), et l'outil de traitement (10) comporte, sur au moins un côté, un bord de travail (30) rigide dans un plan de travail (32), lequel, dans la position de fonctionnement du dispositif (2), est maintenu, dans le premier segment d'arc de cercle sous la pression de contact agissant sur le bras de support (12) associé, parallèle à la surface de sol (28) et, dans le second segment d'arc de cercle (46) lorsque le bras de support (12) est non chargé et détendu, sans contact par rapport à la surface de sol (20), **caractérisé en ce que** la forme du cercle enveloppant varie au moyen des bras de support (12) conçus pour être flexibles et/ou de l'appui flexible des bras de support (12), sur lesquels sont maintenus les outils de traitement (10), lorsqu'un organe de travail se déplace sur une surface de sol (28) sous l'effet d'une pression de contact dans le premier segment d'arc de cercle (44) et les bras de support (12) correspondants sont ainsi relevés par rapport à l'axe de rotation (8) de l'organe de travail (6).

2. Dispositif (2) selon la revendication 1, **caractérisé en ce que** les outils de traitement (10) sont reliés de manière mobile aux bras de support (12) associés.

3. Dispositif (2) selon la revendication 1 ou 2, **caractérisé en ce que** les outils de traitement (10) présentent une forme de baguette.

4. Dispositif (2) selon l'une quelconque des revendications précédentes, **caractérisé en ce que** le plan de travail (32) du bord de travail (30) de l'outil de traitement (10) respectif est réglé selon un angle de réglage (42) obliquement par rapport à l'axe de support (40) du bras de support (12).

5. Dispositif (2) selon l'une quelconque des revendications précédentes, **caractérisé en ce que** la flexibilité des bras de support (12) est supérieure sur leur longueur totale dans la direction axiale de l'axe de rotation (8) à celle dans leur direction de rotation.

6. Dispositif (2) selon l'une quelconque des revendications précédentes, **caractérisé en ce que** le mouvement de compression d'un bras de support (12) dans le premier segment d'arc de cercle dans la position de fonctionnement du dispositif (2) est supérieur à 1/20 du diamètre extérieur de la plus grande extension radiale des outils de traitement.

7. Dispositif (2) selon l'une quelconque des revendications précédentes, **caractérisé en ce que** les outils de traitement (10) sont fixés aux extrémités libres des bras de support (12) et une partie d'un bord de travail (30) s'étend sur l'outil de traitement (10) respectif depuis le point de fixation de l'outil de traitement (10) vu sur le bras de support (12) dans la direction de l'axe de rotation (8) de l'organe de travail (6).

8. Dispositif (2) selon la revendication 7, **caractérisé en ce que** le point de fixation (38) de l'outil de traitement (10) respectif sur le bras de support (12) associé est situé dans la zone médiane de l'outil de traitement (10).

9. Dispositif (2) selon l'une quelconque des revendications précédentes, **caractérisé en ce que** le point de fixation (38) de l'outil de traitement (10) respectif sur le bras de support (12) associé est situé à proximité du centre de gravité de l'outil de traitement (10).

10. Dispositif (2) selon l'une quelconque des revendications précédentes, **caractérisé en ce qu'**une première mesure d'angle de l'axe de support du bras de support (12) respectif par rapport à l'axe de rotation (8), une seconde mesure d'angle du bord de travail (30) de l'outil de traitement (10) par rapport au bras de support (12) respectif, la forme du bras de support (12) respectif, la mesure d'angle de l'axe de rotation (8) par rapport à la verticale, la constante de ressort du bras de support (12) respectif et la forme et la liaison de l'outil de traitement (10) respectif au bras de support (12) respectif sont choisies de telle sorte que le premier segment d'arc de cercle couvre un angle d'au moins 60 ° dans la position de fonctionnement du dispositif (2).

11. Dispositif (2) selon l'une quelconque des revendications précédentes, **caractérisé en ce qu'**un outil de traitement (10) présente au moins une dent d'entraînement (36) au niveau de son extrémité tournée vers l'extérieur et/ou vers l'intérieur.

12. Dispositif (2) selon l'une quelconque des revendications précédentes, **caractérisé en ce qu'**un outil de traitement (10) comporte un bord (34) recourbé vers le haut au niveau de l'au moins une de ses extrémités.

13. Dispositif (2) selon l'une quelconque des revendications précédentes, **caractérisé en ce que** l'outil de traitement (10) comporte un nombre de saillies en forme de dents sur sa face inférieure.

14. Dispositif (2) selon l'une quelconque des revendications précédentes, **caractérisé en ce que** les outils de traitement (10) sont conçus et disposés sur un organe de travail (6) de telle sorte qu'un espace libre ouvert (48) reste entre respectivement deux outils de traitement (10) adjacents dans la direction circonférentielle de l'organe de travail (6).

15. Dispositif (2) selon l'une quelconque des revendications précédentes, **caractérisé en ce que** les bras de support (12) sont montés mobiles autour d'un axe de pivotement, les bras de support (12) comportent respectivement un levier de soutien, par l'intermédiaire duquel le bras de support (12) respectif est soutenu contre un élément de soutien dans une position comprimée, et l'élément de soutien est conçu de manière à être élastique sous pression, de sorte qu'il permet un mouvement de compression du bras de support dans une position comprimée du bras de support (12), dans lequel l'élément de soutien crée des forces de rappel pendant le mouvement de compression du bras de support (12), au moyen desquelles le bras de support (12) peut, à l'état déchargé, au moins partiellement revenir à une position détendue.

16. Dispositif (2) selon l'une quelconque des revendications précédentes, **caractérisé en ce que** les bras de support (12) et/ou les outils de traitement (10) sont reliés les uns entre les autres par l'intermédiaire d'un élément de couplage (58) relié à eux de manière mobile.

17. Dispositif (2) selon l'une quelconque des revendications précédentes, **caractérisé en ce qu'**un corps de moyeu (24) est recouvert par un élément coulissant (60) sur sa face inférieure tournée vers le sol.

18. Dispositif (2) selon l'une quelconque des revendications précédentes, **caractérisé en ce qu'**un organe de travail (6) comporte au moins six bras de support (12).

19. Dispositif (2) selon l'une quelconque des revendications précédentes, **caractérisé en ce que** le dispositif (2) comporte plusieurs organes de travail (6) répartis sur la largeur de travail du dispositif (2).

20. Dispositif (2) selon l'une quelconque des revendications précédentes, **caractérisé en ce que** les organes de travail (6) sont reliés de manière mobile à un cadre (16).
